# EUROPEAN PATENT APPLICATION

(11) **EP 2 650 879 A1**
(43) Date of publication of application: **16.10.2013**
(21) Application number: 10860525.4
(22) Date of filing: 07.12.2010
(51) Int. Cl.: G11B 33/14, G11B 33/12

(54) **STORAGE DEVICE, AND PARTITIION PLATE IN STORAGE DEVICE**

(71) Applicant: Fujitsu Limited, Kawasaki-shi, Kanagawa 211-8588 (JP)
(72) Inventor: NAKAYAMA, Takaya, Kawasaki-shi Kanagawa 211-8588 (JP)
(74) Representative: HOFFMANN EITLE
(86) International application number: PCT/JP2010/071925
(87) International publication number: WO 2012/077186

(57) **Abstract**

A storage apparatus (3) includes: a backplane (10); at least one first storage device (21-1) and one first unit (30) attached to a first face (10-1) of the backplane (10); at least one second storage device (21-2) and one second unit (40) attached to a second face (10-2) of the backplane (10); a first air-flow generator (42) that generates air flow passing through, in sequence, the first storage device (21-1) and the second unit (40); a second air-flow generator (32) that generates air flow passing through, in sequence, the first unit (30) and the second storage device (21-2); and a partition board (50) that is interposed between the first storage device (21-1) and the second storage device (21-2) and that includes a first partition-board opening (51) through which the first storage device (21-1) communicates with the second unit (40) and an inhibitor (52) that prevents the air flow passing through the first storage device (21-1) from flowing into the second storage device (21-2).

## Description

### FIELD

The embodiment discussed herein is a storage apparatus that can mount multiple storage devices both in the front portion and the rear portion, and a partition board preferably used in a storage apparatus.

### BACKGROUND

In accordance with increase in data processed in an information processing device of the recent years, there has been used a disk array apparatus including a large-capacity Drive Enclosure containing multiple Hard Disk Drives densely arranged. Such a disk array apparatus is exemplified by a Redundant Arrays of Inexpensive Disks, that is, a RAID.
In a drive enclosure, which cools the interior elements such as HDDs with air flow generated by a blower such as a fan, the multiple HDDs densely arranged narrow the spaces between two contiguous HDDs and therefore make it difficult to reserve the flow paths of cooling air flow.

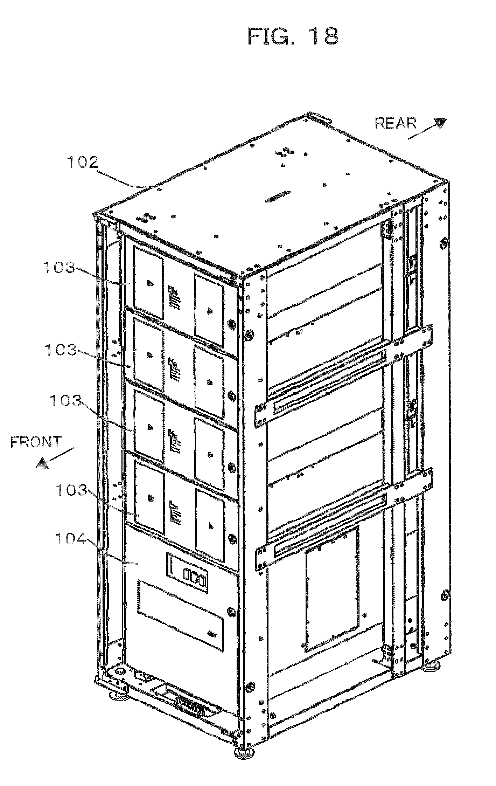

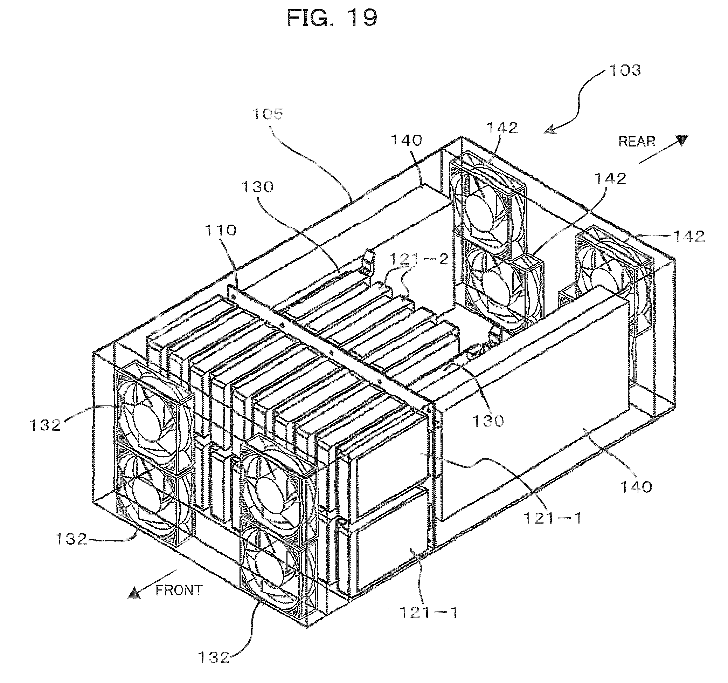

For the above, demands have arisen for a drive enclosure that satisfies both containing multiple HDDs arranged densely and efficient cooling the inside thereof.
Accompanying drawing FIG. 18 is a perspective view illustrating multiple disk array units (drive enclosures) 103 mounted in a rack 102; and FIG. 19 is a perspective view illustrating an example of the configuration of the disk array unit 103 of FIG. 18.

As illustrated in FIG. 18, a rack 102 accommodates multiple (e.g., four) disk array units 103 and a controller unit 104 that collectively controls the operation of the disk array units 103.
As illustrated in FIG. 19, each disk array unit 103 includes a casing 105. Fans 132 that intake air from the front are disposed on the front end (i.e., the left side of FIG. 19) of the casing 105 while fans 142 that exhaust air rearward are disposed on the rear end (i.e., the right side of FIG. 19). The casing 105 further includes a mother board 110 that divides the inner space of the casing 105 into two portions: the front and the rear portion.

The mother board 110 is installed in the casing 105 in such a posture that the front side thereof directs the front end of the casing 105 and the back side thereof directs the rear end of the casing 105.
On the front side of the mother board 110, multiple front-side connectors (not depicted) are arranged at predetermined intervals and first HDDs 121-1 are coupled to the respective front-side connectors.
Meanwhile, on the backside of the mother board 110, multiple back-side connectors (not illustrated) are arranged at intervals larger than those of the front-side connectors and second HDDs 121-2 are coupled to the respective back-side connectors.

A pair of power source units 140 that provides electric power to the HDDs 121-1 and 121-2 is mounted on the back-side of the mother board 110.
Furthermore, an interface printed board 130 that establishes communication via data signals between the controller unit 104 and the HDDs 121-1 and 121-2 is mounted on the back-side of the mother board 110.

Multiple penetrating holes are formed from the front side and the back side of the mother board 110 to encourage air flow generated by the fans 132 and 142 to travel.
In the above disk array unit 103, the fans 132 and 142 operate and thereby generate air flow that travels from the front portion to the rear portion of the casing 105. The generated air flow travels, in sequence, spaces in a group of the first HDDs 121-1, the penetrating holes formed through the mother board 110, and spaces in a group of the second HDDs 121-2.

As the above description made with reference to FIGs. 18 and 19, one of the known techniques to arrange HDDs in a limited spaces more efficiently than a conventional disk array unit mounts HDDs 121-1 and 121-2 on the back side of the mother board 110 as well as the front side thereof. Another known electronic device includes air flow paths that: air flow being taken from the front end of the device and passing through the module on the front portion; and air flow being introduced from the outside of the casing through a lower traverse duct and backside vertical duct and passing through the module on the back portion.

In such an electronic device, air flow that passes through the module on the front portion and air flow that passes through the module on the rear portion ultimately pass through a centralized duct and an upper traverse duct and are ejected from the casing.

### CITATION LIST

### PATENT LITERATURE

[Patent Literature 1] International Publication Pamphlet No. WO 02/009113
[Patent Literature 2] Japanese Laid-open Patent Publication No. 07-202464

### SUMMARY OF THE INVENTION

### PROBLEMS TO BE SOLVED BY THE INVENTION

As the above, the air flow generated by the operation of the fans 132 and 142 passes through the space in the group of the first HDDs 121-1 and then passes through the space in the group of the second HDDs 121-2.
This means that the second HDDs 121-2 are cooled with the air warmed by the group of the first HDDs 121-1.

Accordingly, the above disk array unit 103 has the capability of cooling the second HDDs 121-2 lower than the capability of cooling the first HDDs 121-1.
As detailed above, multiple back-side connectors are mounted at larger intervals than those of multiple front-face connectors in the disk array unit 103.
Accordingly, the mounting density of the group of the second HDDs 121-2 to the back-side connectors is lower than the mounting density of the group of the first HDDs 121-1 to the front-side connectors, so that the mounting efficiency in the disk array unit 103 comes to be lower.

In the above electronic device having a flow path through the module on the front portion different from a flow path through the module of the back portion, the ducts are included in the casing to reserve less space to mount device modules. Consequently, the mounting efficiency lowers.
With the foregoing problems in view, an object of the present embodiment is to efficiently cool the storage devices included in a storage apparatus in which storage devices are attached to the both faces of a backplane.

Another object of the present embodiment is to mount storage devices densely to the both faces of the backplane of the storage apparatus.
In addition to the above object, advantage effects that are derived from the structure according to each embodiment to be detailed below but the conventional art has not achieved can be regarded as other objects of the present invention.

### MEANS TO SOLVE THE PROBLEMS

According to an aspect of the embodiment, the storage apparatus includes a backplane; at least one first storage device attached to a first face of the backplane; at least one second storage device attached to a second face of the backplane; at least one first unit being attached to the first face and being adjacent to the first storage device; at least one second unit being attached to the second face and being adjacent to the second storage device; a first air-flow generator that generates air flow passing through, in sequence, the first storage device and the second unit; a second air-flow generator that generates air flow passing through, in sequence, the first unit and the second storage device; and a partition board that is interposed between the first storage device and the second storage device and that includes a first partition-board opening through which the first storage device communicates with the second unit and an inhibitor that prevents the air flow passing through the first storage device from flowing into the second storage device.

As another aspect of the embodiment, a partition board for a storage apparatus, the storage apparatus includes: a backplane; at least one first storage device attached to a first face of the backplane; at least one second storage device attached to a second face of the backplane; at least one first unit being attached to the first face and being adjacent to the first storage device; at least one second unit being attached to the second face and being adjacent to the second storage device; a first air-flow generator that generates air flow passing through, in sequence, the first storage device and the second unit; and a second air-flow generator that generates air flow passing through, in sequence, the first unit and the second storage device, the partition board being interposed between the first storage device and the second storage device and including: a first partition-board opening through which the first storage device communicates with the second unit; and an inhibitor that prevents the air flow passing through the first storage device from flowing into the second storage device.

### EFFECT OF THE INVENTION

The technique disclosed herein efficiently cools the storage devices attached to the both faces of the backplane in a storage apparatus.
The technique disclosed herein allows a storage apparatus in which storage devices are mounted to the both faces of the backplane to densely mount the storage devices.

### BRIEF DESCRIPTION OF DRAWINGS

FIG. 1 is a perspective view illustrating an example of the entire configuration of a disk array unit according to a first embodiment;
FIG. 2 is a perspective view illustrating an example of the configuration of a drive enclosure of the first embodiment;
FIG. 3 is a top view of a drive enclosure of FIG. 2;
FIG. 4 is a front view of an example of a backplane of a drive enclosure of the first embodiment;
FIG. 5 is a top view illustrating a backplane and a partition board of a drive enclosure of the first embodiment;
FIG. 6 is a front view illustrating a backplane and a partition board of FIG. 5;
FIG. 7 is a perspective view illustrating a storage unit of a drive enclosure of the first embodiment;
FIG. 8 is a front view of a drive enclosure of FIG. 2;
FIG. 9 is a rear elevation view of a drive enclosure of FIG. 2;
FIG. 10 is a top view depicting air flow when a drive enclosure of the first embodiment is operating;
FIG. 11 is a top view depicting airflow near to a backplane and a partition board when a drive enclosure of FIG. 10 is operating;
FIG. 12 is a top view of a drive enclosure of FIG. 2;
FIG. 13 is a perspective view illustrating a backplane and a partition board of a drive enclosure according to a modification to the first embodiment;
FIG. 14 is a front view illustrating a backplane and a partition board of FIG. 13;
FIG. 15 is a sectional view of a backplane and a partition board of FIG. 14 being sectioned by arrow A-A;
FIG. 16 is a sectional view of a backplane and a partition board of FIG. 14 being sectioned by arrow A-A when a drive enclosure of the modification is operating;
FIG. 17 is a front view illustrating a backplane of a drive enclosure of the modification;
FIG. 18 is a perspective view illustrating disk array units mounted in a rack; and
FIG. 19 is a perspective view illustrating an example of the configuration of a disk array unit of FIG. 18.

### DESCRIPTION OF REFERENCE CHARACTERS

- 1: DISK ARRAY APPARATUS
- 2, 102: RACK
- 3: DRIVE ENCLOSURE (STORAGE APPARATUS)
- 4: CONTROLLER
- 5, 105: CASING
- 10, 10', 110: BACKPLANE
- 10-1, 10-1': FIRST FACE OF BACKPLANE (FIRST FACE)
- 10-2, 10-2': SECOND FACE OF BACKPLANE (SECOND FACE)
- 11: BACKPLANE FIRST OPENING
- 12, 12-1, 12-2: BACKPLANE SECOND OPENING
- 13: FIRST STORAGE UNIT CONNECTOR
- 14: SECOND STORAGE UNIT CONNECTOR
- 20-1: FIRST STORAGE UNIT
- 20-2: SECOND STORAGE UNIT
- 21-1, 121-1: FIRST HDD (FIRST STORAGE DEVICE)
- 21-2, 121-2: SECOND HDD (SECOND STORAGE DEVICE)
- 22, 22-1, 22-2: RELAY CONNECTOR
- 23, 23-1, 23-2: BACKPLANE CONNECTOR
- 24, 24-1, 24-2: DISK COVER (COVER)
- 25, 25-1, 25-2: VENT HOLE
- 26, 26-1, 26-2: PENETRATING HOLE
- 30: CONTROL UNIT (FIRST UNIT)
- 31: CONTROL UNIT COVER (FIRST UNIT COVER)
- 32, 132: FAN (SECOND AIR-FLOW GENERATOR)
- 33: FIRST INTAKE OPENING
- 34: FIRST EXHAUST OPENING
- 35: CIRCUIT BOARD (FIRST CIRCUIT DEVICE)
- 36: CIRCUIT ELEMENT
- 37: IF PORT
- 40, 140: POWER SOURCE UNIT (SECOND UNIT)
- 41: POWER SOURCE UNIT COVER (SECOND UNIT COVER)
- 42, 142: FAN (FIRST AIR-FLOW GENERATOR)
- 43: SECOND INTAKE OPENING
- 44: SECOND EXHAUST OPENING
- 45: CIRCUIT BOARD (SECOND CIRCUIT DEVICE)
- 46: CIRCUIT ELEMENT
- 47: INLET
- 50, 50': PARTITION BOARD
- 51: FIRST PARTITION-BOARD OPENING
- 52: INHIBITOR
- 53: CONNECTOR OPENINGS
- 54: VENT SPACE
- 55: PROTRUSION
- 56: PARTITION
- 103: DISK ARRAY UNIT
- 104: CONTROLLER UNIT
- 130: INTERFACE PRINTED BOARD

### DESCRIPTION OF EMBODIMENTS

Hereinafter, an embodiment of the present invention will now be described with reference to the accompanying drawings.
(1) configuration of a first embodiment:
   (1-1) entire configuration of a drive enclosure:
      Description will now be made in relation to the entire configuration of a drive enclosure (storage apparatus) 3 according to a first embodiment.

First, the configuration of a drive enclosure 3 of the first embodiment will be briefly described. Each functional element of the drive enclosure 3 will be detailed below.

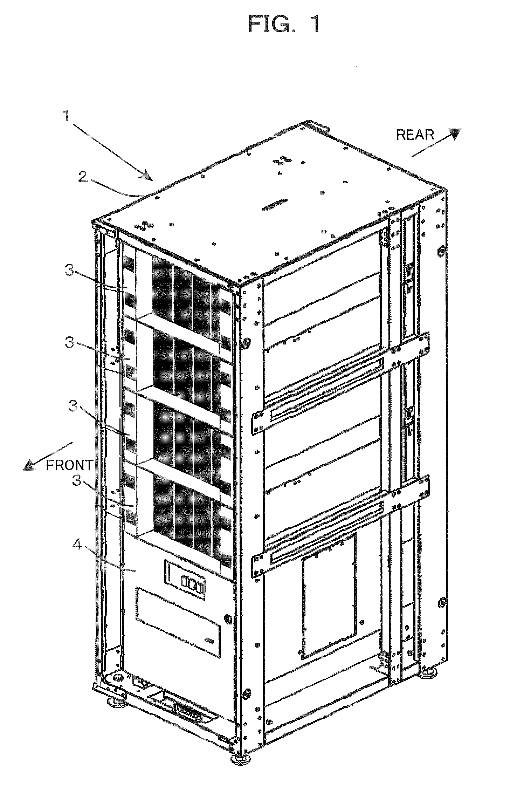

FIG. 1 is a perspective view illustrating the configuration of a disk array apparatus 1 according to the first embodiment.

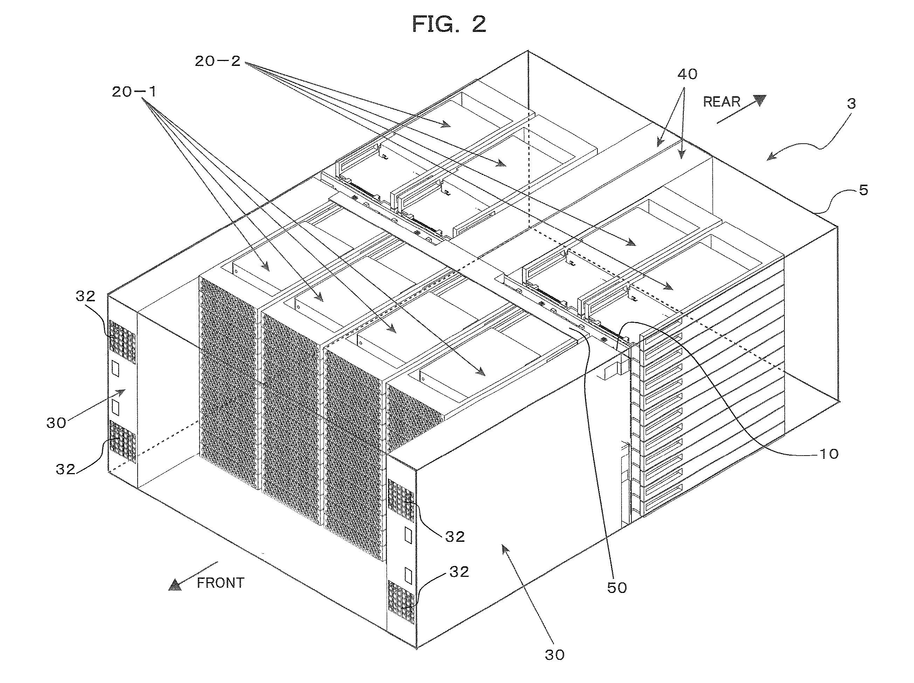

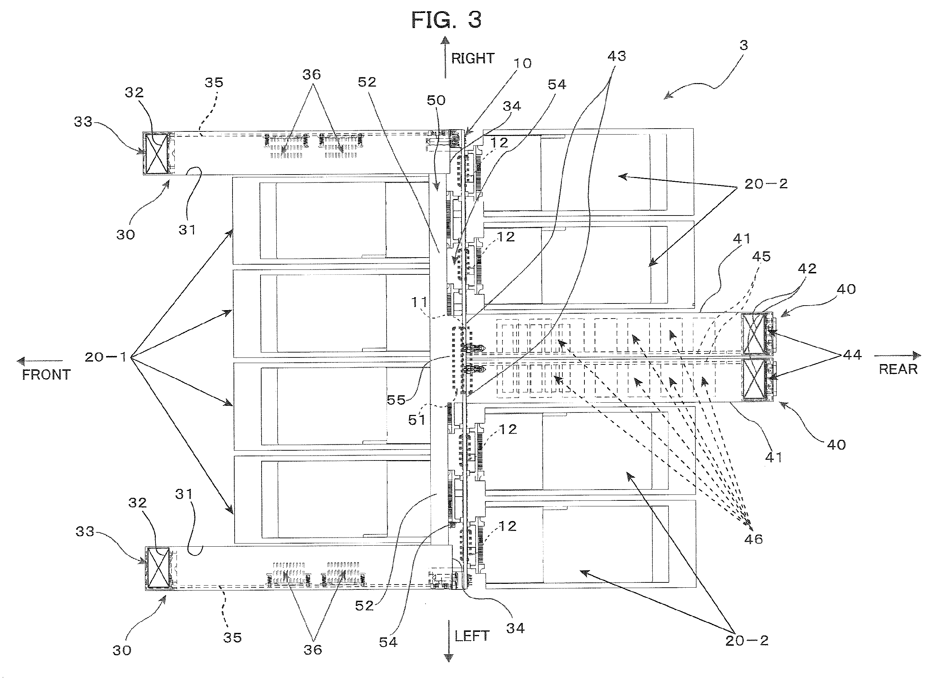

FIG. 2 is a perspective view illustrating an example of the configuration of the drive enclosure 3 serving as an example of the first embodiment; and FIG. 3 is a top view of the drive enclosure 3 of FIG. 2.

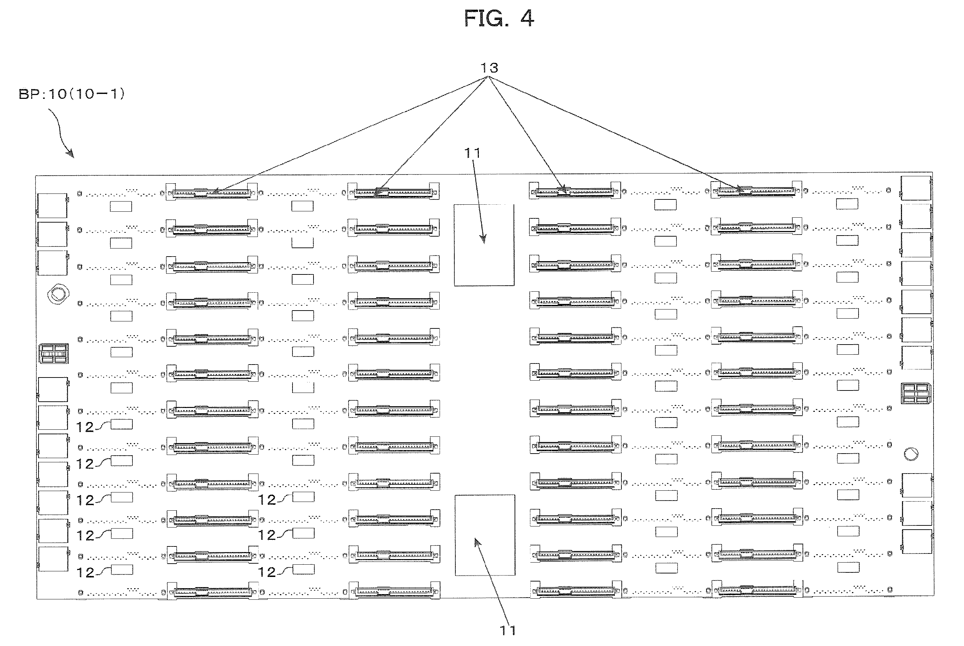

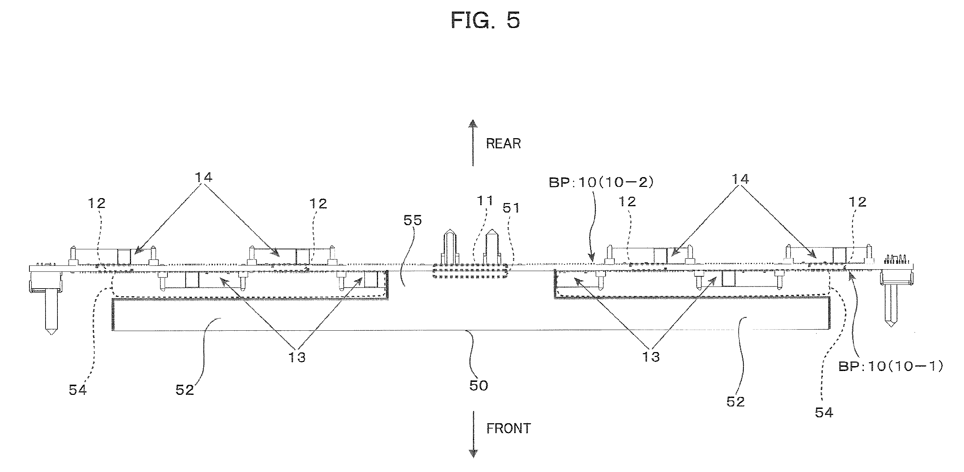

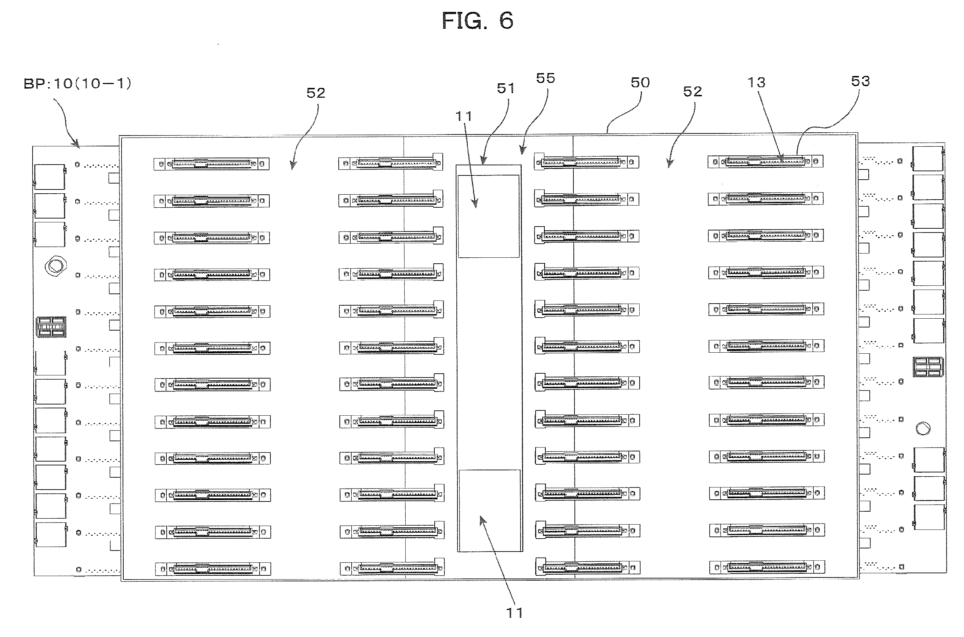

FIG. 4 is a front view illustrating a backplane 10 of a drive enclosure 3 of the first embodiment. FIG. 5 is a top view illustrating a backplane 10 and a partition board 50 that are included in the drive enclosure 3 of the first embodiment; and FIG. 6 is a front view illustrating the backplane 10 and the partition board 50 of FIG. 5.

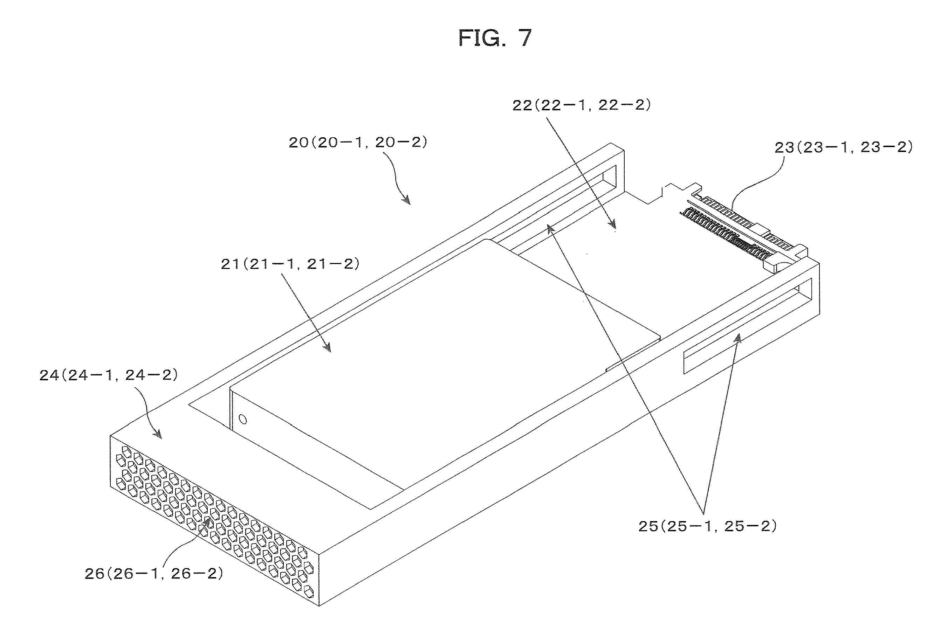

FIG. 7 is a perspective view illustrating a storage unit 20 included in the drive enclosure 3 of the first embodiment.

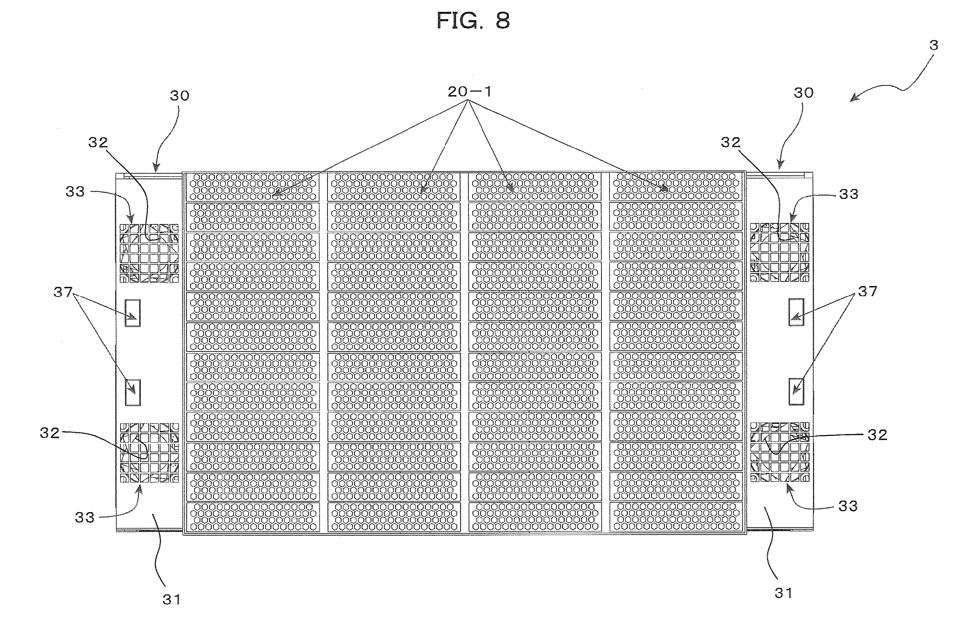

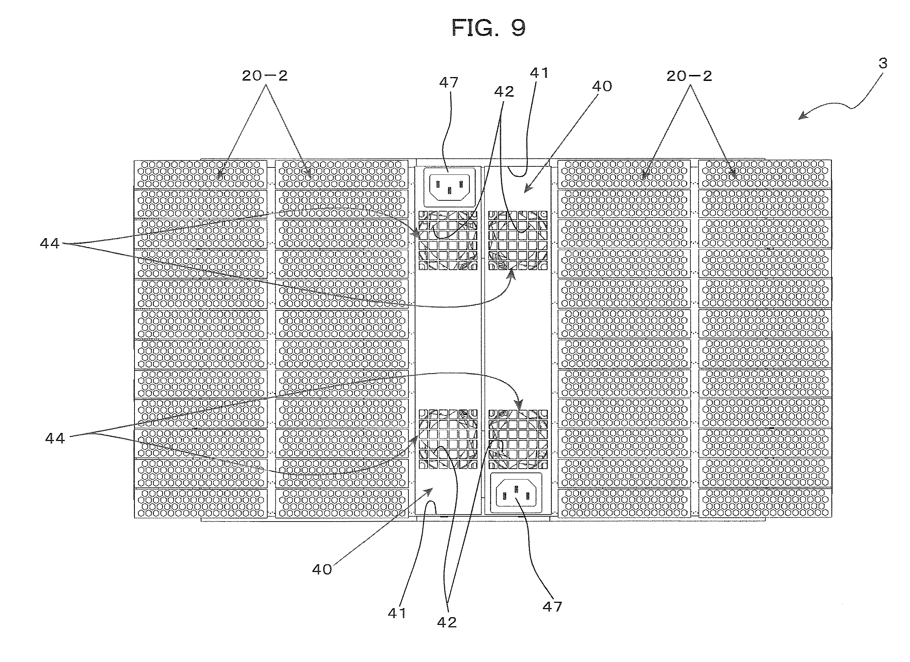

Further, FIG. 8 is a front view of the drive enclosure 3 of FIG. 2; and FIG. 9 is a rear elevation view of the drive enclosure 3 of FIG. 2.
FIG. 2 conveniently illustrates the perspective of the inside of a casing 5. FIGs. 3, 8, and 9 omit illustration of the casing 5.
As illustrated in FIG. 1, the disk array apparatus 1 includes a rack 2, the drive enclosures 3, and a controller 4.

The rack 2 includes multiple (e.g., four) drive enclosures 3 and the controller 4 that collectively controls the multiple drive enclosures 3.
As illustrated in FIG. 2, each drive enclosure 3 that is to be used for an information processing device includes the casing 5, the backplane 10, at least one first storage unit 20-1, and at least one second storage unit 20-2.

Further, each drive enclosure 3 includes at least one (two in the first embodiment) control unit (first unit) 30, at least one (two in the first embodiment) power source unit (second unit) 40, and the partition board 50.
Each drive enclosure 3 of FIG. 1 is mounted in the rack 2, but the rack 2 is not limited to this and the enclosure 3 may not be mounted in the rack 2.

The backplane 10 is a circuit board that includes multiple connectors disposed on the opposite faces and that functions as a bus by connecting the multiple connectors. The first storage units 20-1, the second storage units 20-2, the control units 30, and the power source units 40 are connected to the multiple connectors. The backplane 10 is the substantially same in size and shape as the section of the casing 5. Hereinafter, in the drive enclosure 3 of FIG. 2, a portion which is separated by the backplane 10 and which includes the first storage unit 20-1 and the control unit 30 (that is, the left portion of FIG. 3 (sic, correctly FIG. 2)) is referred to as a front portion, and a face of the backplane 10, the face opposing to the front potion, is refereed to as a first face 10-1. In contrast, a potion of the drive enclosure 3 which is separated by the backplane 10 and which includes the second storage unit 20-2 and the power source unit 40 (that is, the right portion of FIG. 3 (sic, correctly FIG. 2)) is referred to as a rear portion, and a face of the backplane 10, the face opposing to the rear potion, is refereed to as a second face 10-2.

Specifically, the backplane 10 is arranged in the casing 5 of the drive enclosure 3 such that the first face 10-1 is directed to the front portion and the second face 10-2 is directed to the rear portion and also such that the backplane 10 is fit inside the casing 5.
With this structure, the backplane 10 serves as a partition that divides the inside of the casing 5 into the front portion and the rear portion.

As illustrated in FIG. 2, at least one first storage unit 20-1 is attached to the first face 10-1 of the backplane 10, and at least one control unit 30 is disposed adjacently to the first storage unit 20-1. In the first embodiment, two control units 30 are arranged at the both ends of the first face 10-1 so as to horizontally sandwich the first storage units 20-1 and also so as to be upright from the floor surface of the casing 5.

On the second face 10-2 of the backplane 10, at least one second storage unit 20-2 is attached and also at least one power source unit 40 is disposed adjacently to the second storage unit 20-2. In the first embodiment, two power units 40 are arranged so as to be upright from the floor surface of the casing 5 and so as to be sandwiched by the second storage units 20-2 divided into two groups.

The detailed configuration of the backplane 10 will be described blow.
The casing 5 has a cylindrical shape that defines the rectangular-parallelepiped inner space of each drive enclosure 3. The front end and the rear end of the drive enclosure 3 of FIG. 2 open.
In detail, the front face of the drive enclosure 3 of the casing 5 has an opening, so that the control unit 30 and the first storage unit 20-1 are exposed to the outside of the drive enclosure 3. The rear face of the drive enclosure 3 of the casing 5 has an opening, so that the second storage unit 20-2 and the power source unit 40 are exposed to the outside of the drive enclosure 3.

The casing 5 may include a front cover capable of opening and shutting the front-end opening. If the casing 5 has a front cover, the front cover preferably includes an air intake opening that takes air from the outside of the drive enclosures 3. Similarly, the casing 5 may include a rear cover capable of opening and shutting the rear-end opening. If the casing 5 has a rear cover, the rear cover preferably includes an air exhaust opening that exhausts air to the outside of the drive enclosures 3.

In addition, the casing 5 may include guide rails to store the drive enclosures 3 into the rack 2.
As illustrated in FIG. 7, each first storage unit 20-1 includes a first HDD (first storage device) 21-1 and similarly each second storage unit 20-2 includes a second HDD (second storage device) 21-2.

Hereinafter, when there is no need to discriminate a first storage unit 20-1 and a second storage unit 20-2 from each other, these storage units are each simply referred to as a "storage unit 20". Similarly, when there is not need to discriminate a first HDD 21-1 and a second HDD 21-2, these HDDs are each simply referred to as a "HDD 21".
As the above, each drive enclosure 3 is capable of mounting the HDDs 21 on both front and rear face of the backplane 10.

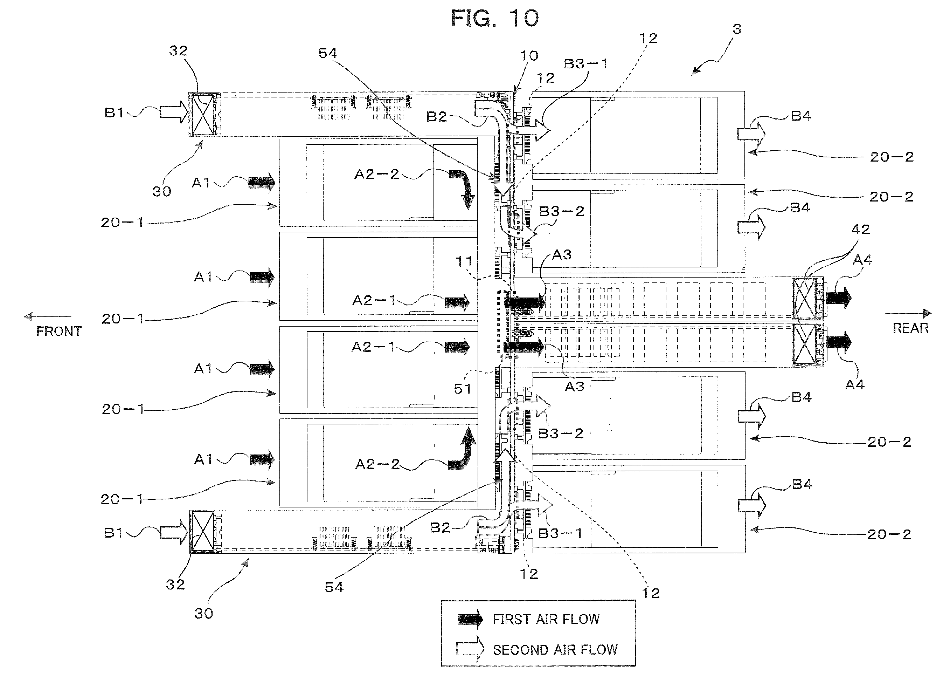

The detailed configuration of the storage unit 20 will be described below.
As illustrated in FIG. 8, each control unit 30 includes two second fans (second air-flow generators) 32, which generate second air flow (see "SECOND AIR FLOW" in FIG. 10) that passes through, in sequence, the control unit 30 and the second storage units 20-2.
As illustrated in FIG. 9, each power source unit 40 includes two first fans (first air-flow generators) 42, which generate first air flow (see "FIRST AIR FLOW" in FIG. 10) that passes through, in sequence, the first storage units 20-1 and the power source unit 40.

The detailed configuration of the control units 30 and the power source units 40 will be described below.
The partition board 50 is interposed between the first storage units 20-1 and the second storage units 20-2, more specifically, between the backplane 10 and the first storage units 20-1.
On the partition board 50, at least one (one in the example of FIG. 6) first partition-board opening 51 through which the first storage units 20-1 communicate with the power source units 40 (see FIG. 6). The first air-flow, which is generated by the first fans 42 and having passed through the first storage units 20-1, passes through the first partition-board opening 51 and then flows into the power source units 40.

The partition board 50 includes an inhibitor 52 that prevents the first air-flow having passed through the first storage units 20-1 from flowing into the second storage units. As depicted in FIG. 3, the inhibitor 52 has a shape that surrounds the faces of storage units 20-1, the faces opposing to the first face 10-1.
The inhibitor 52 prevents the first air-flow, which is generated by the first fans 42 and which having passed through the first storage units 20-1, from flowing into the second storage units 20-2, but allows the first air flow to flow into the first partition-board opening 51 and then pass through the power source units 40.

Meanwhile, the partition board 50 causes the second air-flow, which is generated by the second fans 32 and which has passed through the control units 30, passes through a space between the inhibitor 52 and the first face 10-1 of the backplane 10 and then flows into the second storage units 20-2.
The configuration of the partition board 50 will be detailed below.
Here, a typical HDD endures heat temperature around 60 °C, and is a device that is the most susceptible to heat in the drive enclosure and that emits a large amount of heat.

Each drive enclosure 3 of the first embodiment includes HDDs 21 disposed on both front and rear faces and is configured to cool the first HDDs 21-1 on the front portion and the second HDDs 21-2 on the second portion by respective different air flows (i.e., the first air flow and the second air flow), respectively.
This configuration efficiently cools the second HDDs 21-2 with air having passed through the control units 30, which emit heat less in amount that heat emitted from a HDD, so that improvement in efficiency in cooling the second HDDs 21-2 improves the efficiency of cooling the entire drive enclosure 3.

Furthermore, the above improvement in efficiency in cooling the second HDDs 21-2 makes the mounting density of the second HDDs 21-2 the almost same as that of the first HDDs 21-1, so that the mounting efficiency in the drive enclosure 3 can be improved.
(1-2) configuration of each element of the drive enclosure:
Next, description will now be made in relation to the detailed configuration of the backplane 10, the storage units 20, the control units 30, the power source units 40, and the partition board 50 that included in each drive enclosure 3.

As illustrated in FIG. 4, a backplane first opening 11 and a backplane second opening 12 that penetrate from the first face 10-1 to the second face 10-2 are formed on the backplane 10. At least one first storage unit connector 13 to which the first storage unit 20-1 is to be mounted is disposed on the first face 10-1 of the backplane 10. Each first storage unit 20-1 is electrically coupled to the backplane 10 via a relay connector 22-1, which is coupled to the first HDD 21-1 therein and that is to be detailed below.

As illustrated in FIG. 5, at least one second storage unit connector 14 to which the second storage unit 20-2 is to be mounted is disposed on the second face 10-2 of the backplane 10. Each second storage unit 20-2 is electrically coupled to the backplane 10 via a relay connector 22-2, which is coupled to the second HDD 21-2 therein and that is to be detailed below.
Each first storage unit connector 13 is preferably disposed on the first face 10-1 of the backplane 10 so as not to overlap each second storage unit connector 14 disposed on the second face 10-2. For example, as illustrated in FIGs. 4 and 5, it is preferable that the first storage unit connectors 13 disposed on the first face 10-1 and the second storage unit connectors 14 disposed on the second face 10-2 are alternately disposed along the longitudinal direction of the connectors 13 and 14.

A space along the longitudinal direction between two contiguous first storage unit connectors 13 disposed on the first face 10-1 is the substantially same in extent as a space along the longitudinal direction between two contiguous second storage unit connectors 14. A space along the direction perpendicular to the longitudinal direction between two contiguous first storage unit connectors 13 disposed on the first face 10-1 is the substantially same in extent as a space along the direction perpendicular to the longitudinal direction between two contiguous second storage unit connectors 14.

The backplane first opening 11 is an opening through which the first storage units 20-1 communicate with the power source units 40. In other words, the backplane first opening 11 is an opening through which air flow (first air flow) having passed through the first storage units 20-1 flows into the power source units 40.
For this purpose, the backplane first opening 11 is preferably formed at a position opposing to the power source units 40 on the second face 10-2. Specifically, the backplane first opening 11 is preferably formed so as to oppose to second intake openings 43 of the power source units 40. The second intake openings 43 will be detailed blow.

As depicted in FIG. 4, two backplane first openings 11 of the first embodiment are interposed between two groups formed by horizontally grouping the second storage units 20-2, that is, on the second face 10-2, and are vertically arranged at positions opposing to the power source units 40.
The backplane second opening 12 is an opening through which the control units 30 communicate with the second storage units 20-2. In other words, the backplane second opening 12 is an opening through which air flow (second air flow) having passed through the control units 30 flows into the second storage units 20-2.

For this purpose, the backplane second opening 12 is preferably disposed at a position opposing to the second storage units 20-2 on the second face 10-2. Each backplane second opening 12 is preferably disposed in vicinity of a position where each second storage unit connector 14 is arranged on the second face 10-2, for example, a position between two contiguous second storage unit connectors 14. In other words, each backplane second opening 12 is preferably disposed at a position not overlapping with the first storage unit connectors 13 and the second storage unit connectors 14 respectively on the first face 10-1 and the second face 10-2 so that the backplane second opening 12 does not interfere with the positions of the connectors 13 and 14.

As depicted in FIG. 4, the backplane second openings 12 of the first embodiment are disposed on either one of the left side or the right side of the respective first storage unit connectors 13. Furthermore, as depicted in FIG. 4, the backplane second openings 12 of the first embodiment are disposed on either one of the top side or the bottom side of the respective second storage unit connectors 14.
As illustrated in FIGs. 3 and 5, the backplane second openings 12 are disposed on the positions facing vent spaces 54 defined by the partition board 50 and the backplane 10. The vent spaces 54 will be detailed below.

As described above, the partition board 50 is interposed between the first storage units 20-1 and the second storage units 20-2, more specifically between the backplane 10 and the first storage units 20-1. The partition board 50 includes at least one first partition-board opening 51 through which the first storage units 20-1 communicate with the power source units 40.
Here, the first partition-board opening 51 is preferably formed at a position opposing to the backplane first opening 11 detailed above. In other words, an opening is formed by connecting the first partition-board opening 51 and the backplane first opening 11 to each other. The first partition-board opening 51 and the backplane first opening 11, which oppose to each other, make the first air flow having passed through the first storage units 20-1 to pass through the first partition-board opening 51 and the backplane first opening 11 and efficiently flow into the power source units 40.

In the first embodiment, the first partition-board opening 51 includes an opening having an area size covering the respective openings of the two backplane first openings 11.
As depicted in FIG. 5, the partition board 50 preferably sticks out toward the first face 10-1 at the outer circumference of the first partition-board opening 51 and thereby forms a protrusion 55 that prevents the second air flow having passed through the control units 30 from flowing into the power source units 40.

Namely, the protrusion 55 takes a shape formed by raising the material around the first partition-board opening 51 toward the first face 10-1.
In other words, the protrusion 55 is interposed between the partition board 50 and the first face 10-1 and is a cylindrical member having an opening on the face opposing to the partition board 50 and the first face 10-1. The opening formed on the face of the cylindrical member, the face opposing to the first face 10-1 is the first partition-board opening 51. In this case, an opening for the protrusion, the opening being the same in size and shape as the section of the cylindrical member, is formed on the partition board 50, and the opening for protrusion of the partition board 50 and the opening of the cylindrical member formed on the face opposing to the partition board 50 are coupled to each other.

Accordingly, the protrusion 55 of the partition board 50 may be take an integrated form with the partition board 50 or may be formed by coupling the formed cylindrical member to the partition board 50 having the opening for protrusion.
The protrusion 55 of the partition board 50 can prevent the second air flow that is generated by the second fans 32 and that has passed through the control units 30 from flowing from the vent space 54 into the power source units 40.

The protrusion 55 of the partition board 50 couples the first partition-board opening 51 and the backplane first opening 11 to each other so that the two openings communicate with each other. Accordingly, the first air flow, which is generated by the first fans 42 and which has passed through the first storage units 20-1, can be efficiently introduced into the power source units 40, so that the capability of cooling each drive enclosure 3 can be enhanced.
As described above, the partition board 50 includes the inhibitor 52 that prevents the first air flow having passed through the first storage units 20-1 from flowing into the second storage units.

The inhibitor 52 has a shape covering a face of each first storage units 20-1, the face opposing to the first face 10-1. Specifically, the partition board 50 is disposed parallel to the first face 10-1 in the casing 5 and the inhibitor 52 is an element of the partition board 50, the element being disposed at at position opposing to the first storage units 20-1.
The inhibitor 52 causes the first air flow, which is generated by the first fans 42 and which has passed through the first storage units 20-1, not to flow into the second storage units 20-2 but to flow into the first partition-board opening 51 and pass through the power source units 40.

As depicted in FIGs. 3 and 5, the partition board 50 defines the vent spaces 54 between the inhibitor 52 and the backplane 10, into which spaces the second air flow generated by the second fans 32 is flown.
Here, as the above, the backplane second openings 12 are formed on the backplane 10 at a position facing the vent spaces 54.
The second air flow, which is generated by the second fans 32 and which is flown into the vent spaces 54, passes through the backplane second openings 12 facing the vent spaces 54 and then flows into the second storage units 20-2. The protrusion 55 prohibits the second air flow entering the vent spaces 54 from flowing into the power source units 40.

As depicted in FIG. 6, connector openings 53, which the first storage units 20-1 penetrate, are formed on the partition board 50 (inhibitor 52) so that the first storage units 20-1 are coupled to the backplane 10.
In the first embodiment, connectors (i.e., relay connectors 22-1 that are to be detailed below) that couple the respective first storage units 20-1 to the backplane 10 penetrate the connector openings 53.
The relay connector 22-1 of each first storage unit 20-1 penetrates the connector opening 53 and is thereby coupled to the first storage unit connector 13 on the backplane 10.

As the above, the partition board 50 (the inhibitor 52) prevents the first air flow, which is generated by the first fans 42 and which has passed through the first storage units 20-1, from f lowing into the vent spaces 54, i.e., the second storage units 20-2.
If there is a gap between the opening of the connector opening 53 and the corresponding first storage unit 20-1 under a state where the first storage unit 20-1 penetrates the connector opening 53 and is coupled to the first storage unit connector 13, part of first air flow having passed through the first storage unit 20-1 flows into the corresponding vent space 54 through the connector opening 53. Consequently, the first air flow which the inhibitor 52 intends to prevent from flowing into the vent space 54 flows into the second storage units 20-2 through the gap between the opening of the connector opening 53 and the first storage unit 20-1.

Accordingly, the opening of each connector opening 53 preferably has the substantially same shape as the section of the corresponding first storage unit 20-1 (the relay connector 22-1) so that the first air flow having passed through the first storage unit 20-1 does not flow into the vent spaces 54 through the connector opening 53.
If the first HDD 21-1 is directly coupled to the first storage unit connector 13 on the backplane 10 not using the relay connector 22-1, the connector opening 53 preferably has an opening of an area only to penetrate the first HDD 21-1 or the connector (not shown) of the first HDD 21-1.

Under a state where each first storage unit 20-1 penetrates the connector opening 53 and is coupled to the first storage unit connector 13, part of the first storage unit 20-1 positions at the vent space 54 and is therefore cooled with the second flow.
The part of the first storage unit 20-1 (relay connector 22-1) corresponds to the end of the relay connector 22-1 on the side of the backplane 10 or, when the first HDD 21-1 is directly connected to the backplane 10, corresponds to the end of the first HDD 21-1 on the side of the backplane 10. The relay connector 22-1 has a backplane connector 23-1 (see FIG. 7) on the end of the side of the backplane 10 thereof while the first HDD 21-1 includes a connector of the first HDD 21-1 on the side of the backplane 10.

An amount of heat emitted from the part of the first storage unit 20-1 (relay connector 22-1) is much smaller than an amount of heat emitted from the main portion of the first HDD 21-1 to be cooled by the first flow, that is, an amount of heat emitted from a rotating mechanism inside the first HDD 21-1.
Accordingly, the part of the first storage unit 20-1 (relay connector 22-1) positioning on the vent space 54 can be considered not to affect cooling the second storage unit 10-2 with the second air flow passing through the vent space 54.

Next, description will now be made in relation to the configuration and the function of the first storage unit 20-1 and the second storage unit 20-2. In the first embodiment, the first storage unit 20-1 and the second storage unit 20-2 have the common configuration and are both detailed with reference to FIG. 7.
As illustrated in FIG. 7, each first storage unit 20-1 includes the first HDD 21-1 detailed above, a relay connector 22-1 and a disk cover (cover) 24-1.

A relay connector 22-1 includes a connector (not illustrated) to be coupled to the connector (not illustrated) of the first HDD 21-1 and a backplane connector 23-1 to be coupled to the first storage unit connector 13 mounted on the first face 10-1. In other words, the first HDD 21-1 is coupled to the first storage unit connector 13 of the backplane 10 through the relay connector 22-1.

The relay connector 22-1 is preferably smaller than the corresponding first HDD 21-1. Specifically, the relay connector 22-1 preferably has a section at the face perpendicular to the first air flow passing through the first storage unit 20-1 smaller than the section of the first HDD 21-1.
The disk cover 24-1 surrounds and fixes the first HDD 21-1 and the relay connector 22-1. The disk cover 24-1 preferably has a shape not surrounding the backplane connector 23-1 of the relay connector 22-1. Specifically, as illustrated in FIGs. 3 and 7, the disk cover 24-1 preferably has a shape not surrounding a region of the relay connector 22-1 which region penetrates the connector opening 53 of the partition board 50 when the first storage unit 20-1 is being coupled to the backplane 10.

Thereby, as the above description related to the partition board 50, the opening of each connector opening 53 can be formed into the almost same shape as of the section of the relay connector 22-1.
A vent hole 25-1 is preferably formed on the disk cover 24-1 so as to face the relay connector 22-1. Specifically, the vent holes 25-1 are preferably formed on faces perpendicular to the longitudinal direction of the backplane connector 23-1. Namely, the vent holes 25-1 are preferably formed on the disk cover 24-1, the face being perpendicular to a direction (i.e., the direction along the "LEFT" and the "RIGHT" arrows in FIG. 3) from the first partition-board opening 51 to the left and the right end of the partition (sic, correctly inhibitor) 52.

For example, the first air flow passing through the first storage unit 20-1 arranged at a farther position from the first partition-board opening 51 flows through other first storage units 20-1 toward the first partition-board opening 51 in the direction parallel to the partition board 50 (see arrow A2-2 in FIG. 10).
When the vent holes 25-1 are formed on the disk cover 24-1, the first air flow is allowed to reach the first partition-board opening 51 through the vent holes 25-1 without passing through an area dense with first storage units 20-1 (first HDDs 21-1). When the relay connector 22-1 is smaller than the first HDD 21-1, the first air flow having passed the first storage units 20-1 smoothly passes through the vent holes 25-1.

Accordingly, the relay connector 22-1 and the disk cover 24-1 (vent holes 25-1) make it possible to reduce the resistance that degrades the speed and the amount of the first air flow passing through the first storage units 20-1 as compared with a case where the first HDD 21-1 is directly coupled to the first face 10-1.
As described above, the connector opening 53, if having an opening almost the same in shape as the section of the first storage unit 20-1 (relay connector 22-1), prevents the first air flow having passed through the first storage unit 20-1 from flowing into the vent space 54 through the connector opening 53.

With this configuration, it is possible to prevent the first air flow having passed through (cooled) the first storage units 20-1 from mixing with the second air flow that is to pass through (cool) the second storage units 20-1 (sic, correctly 20-2).
Penetrating holes 26-1 are preferably formed on the front face of the disk cover 24-1, that is, on the opposite face to the face having the relay connector 22-1 (backplane connector 23-1), so that the first air flow generated by the first fans 42 is taken through the penetrating holes 26-1 and is directed to the first HDD 21-1.

Similarly, each second storage unit 20-2 includes the above second HDD 21-2, the relay connector 22-2, and a disk cover (cover) 24-2.
The relay connector 22-2 includes a connector (not illustrated) to be coupled to the connector (not illustrated) of the second HDD 21-2 and a backplane connector 23-2 to be coupled to the second storage unit connector 14 mounted on the second face 10-2. In other words, the second HDD 21-2 is coupled to the second storage unit connector 14 of the backplane 10 through the relay connector 22-2.

The relay connector 22-2 is preferably smaller than the corresponding second HDD 21-2. Specifically, the relay connector 22-2 preferably has a section at the face perpendicular to the second air flow passing through the second storage unit 20-2 smaller than the section of the second HDD 21-2.
The disk cover 24-2 surrounds and fixes the second HDD 21-2 and the relay connector 22-2.

Vent holes 25-1 may be formed on the disk cover 24-2 so as to face the relay connector 22-2.
The flow amount of the second air flow passing through the backplane second opening 12 may be different with the position of the backplane second opening 12. For example, as illustrated in FIG. 3, the second air flow that is generated by the second fans 32 and that is passing through the backplane second opening 12 farther from a position where either control unit 30 is disposed on the first face 10-1 may have a smaller flow amount than the second flow passing through the backplane second opening 12 closer to the position where the control unit 30 is disposed on the first face 10-1. This is caused because the second air flow passing through the backplane second opening 12 farther from a position where either control unit 30 is disposed on the first face 10-1 travels the vent space 54 having a large resistance longer than the second air flow passing through the backplane second opening 12 closer to the position where the control unit 30 is disposed.

When the vent holes 25-2 are formed on the disk cover 24-2, the second air passing through the second storage unit 20-2 is allowed to pass through the vent hole 25-2 and reach another second storage unit 20-2 through which a small amount of air is flowing. As detailed above, when the relay connector 22-2 is smaller than the second HDD 21-2, the second air flow having passed through the second backplane opening 12 smoothly passes through the vent holes 25-2.

Accordingly, the relay connector 22-2 and the disk cover 24-2 (vent hole 25-2) make it possible to reduce the resistance that degrades the speed and the amount of the second air flow passing through the second storage units 20-2 as compared with a case where the second HDD 21-2 is directly coupled to the second face 10-2.
The second storage unit 20-2 is directly coupled to the second storage unit connector 14 formed on the second face 10-2 without being interposed by the partition board 50. Also as detailed above, an amount of air flowing parallel to the partition board 50 in the second storage units 20-2 is smaller than air flowing in the first storage units 10-1.

Accordingly, each second storage unit 20-2 may omit to include the relay connector 22-2. Omitting the relay connector in the second storage unit 20-2 saves the space inside the drive enclosure 3 and also reduces the production cost of the drive enclosure 3 (the second storage unit 20-2).
The disk cover 24-2 may omit to include the vent holes 25-2. Omitting the vent holes 25-2 on the disk cover 24-2 reduces the production cost of the drive enclosure 3 (the second storage unit 20-2).

Penetrating holes 26-2 that exhaust the second air flow generated by the second fans 43 from the drive enclosure 3 are preferably formed on the front face of the disk cover 24-2, that is, the face opposite to the face having the relay connector 22-2 (backplane connector 23-2).
Hereinafter, the relay connectors 22-1 and 22-2, if not being discriminated from each other, are each simply referred to as the relay connectors 22; and similarly, the disk covers 24-1 and 24-2, if not being discriminated from each other, are each simply referred to as the disk cover 24.

If the HDDs 21 includes HDDs conforming to the Serial Attached SCSI (SAS) standard and HDDs conforming to the Serial Advanced Technology Attachment (SATA) standard, the relay connectors 22 may have a function as a conversion connector that converts the connector on the HDD 21 to a connector on the backplane 10.
In this case, while the HDDs 21 have connectors confirming to SAS or SATA, the first storage unit connectors 13 and the second storage unit connectors 14 are preferably uniform shapes to maintain the versatility.

For the above, the relay connectors 22 may convert the connector on the HDDs 21 conforming to the SAS or SATA to connectable shape to the first storage unit connector 13 or the second storage unit connector 14.
The control units 30 controls the HDDs 21 in the storage units 20, following to instructions received from the host (not illustrated) exemplified by a server computer.

As illustrated in FIG. 3, each control unit 30 includes the fans 32 described above, and further includes a circuit board (first circuit device) 35 including circuit elements 36 mounted thereon.
Examples of the circuit element 36 are processing units such as a Central Processing Unit (CPU) or a Micro Processing Unit (MPU), storage devices such as a Random Access Memory (RAM) or a Read Only Memory (ROM), capacitors, resistances, which are arranged on the circuit board 35.

As illustrated in FIG. 8, each control unit 30 includes Interface (IF) ports 37 each serving as an interface to receive instructions from the host.
The non-illustrated host is coupled to each IF port 37 via a cable. The communication between each control unit 30 and the host is established via a protocol used in a storage network such as the Fibre Channel.

The circuit board 35 controls the HDDs 21 in the storage units 20 using the circuit elements 36 formed on the circuit board 35, following instructions received from the host through the IF ports 37.
In the drive enclosure 3 of FIG. 3, each control unit 30 is arranged on the first face 10-1 in such a posture that the circuit board 35 is upright from the first face 10-1 of the backplane 10.

As illustrated in FIGs. 3 and 8, each control units 30 includes a control unit cover (first unit cover) 31 on which first intake openings 33 and first exhaust openings 34 are formed.
The control unit cover 31 takes a form of a rectangular parallelepiped and defines the inner space that contains the circuit board 35 and the circuit elements 36.

The first intake openings 33 are formed on the front face of the control unit cover 31 and the first exhaust openings 34 are formed on a face of the control unit cover 31, the face opposing to the first face 10-1.
As depicted in FIGs. 2 and 8, two second fans 32 are provided to each control unit 30 adjacently to the respective first intake openings 33 in the first embodiment.

In each control unit 30, the second air flow generated by the second fans 32 is originated from air taken through the first intake openings 33, cools the circuit board 35 and the circuit elements 36 on the circuit board 35 while passing in vicinity of the board and elements, and is exhausted from the first exhaust openings 34. The second air flow exhausted from the first exhaust openings 34 is then introduced into the vent space 54 to flow into the second backplane opening 12, passes through the second storage units 20-2, and is finally exhausted rearward of the drive enclosure 3.

Here, as described above, the first exhaust openings 34 are formed on the face of the control unit cover 31, the face being opposing to the first face 10-1.
Accordingly, the control unit cover 31 is preferably arranged apart from the first face 10-1 in such a distant that the second air flow exhausted from the first exhaust opening 34 flows into the corresponding vent space 54. For example, each control unit 30 is fixed to the first face 10-1 by attaching the circuit board 35 to the first face 10-1, not by coupling the control unit cover 31 to the first face 10-1.

In order to ensure the stiffness at the connection of each control unit 30 and the first face 10-1, the control unit cover 31 may be fixed to the first face 10-1, being in contact with the first face 10-1. For example, the control unit cover 31 may be fixed to the first face 10-1, being in contact with the first face 10-1 by extending the face of the control unit cover 31, the face being opposing to the inner face of the casing 5, toward the first face 10-1.
As described above, each drive enclosure 3 includes a casing 5 that defines the inner space. Accordingly, even when the control unit cover 31 is apart from the first face 10-1, the second air flow exhausted from the first exhaust openings 34 dose not leak to the outside of the vent space 54. In other words, even when the control unit cover 31 is apart from the first face 10-1, the casing 5 successfully introduces the second air flow exhausted from the first exhaust opening 34 into the vent space 54.

The shape of the control unit cover 31 is not limited to the above, or may alternatively be arranged in contact with the first face 10-1. In this case, the first exhaust openings 34 are preferably disposed at positions on the control unit cover 31, the positions being opposing to the vent space 54, so that the second air flow exhausted from the first exhaust openings 34 flows into the vent space 54.
The power source unit 40 supplies electric power supplied from the power source (not illustrated) to the backplane 10, the storage units 20, and the control units 30.

As illustrated in FIG. 3, each power source unit 40 includes the first fans 42 as described above and a circuit board (second circuit device) 45 including circuit elements 46 mounted thereon.
Examples of the circuit element 46 are processing units such as an MPU, coils, capacitors, which are arranged on the circuit board 45.
As illustrated in FIG. 9, each power source unit 40 includes an inlet 47 through which the electric power supplied from the power source is input into the power source unit 40.

The circuit board 45 supplies electric power via the circuit element 46 mounted on the circuit board 45, which is supplied from the power source and which is input through the inlet 47 (see FIG. 9), to the backplane 10, the storage units 20, and the control units 30.
In the drive enclosure 3 of FIG. 3, each power source unit 40 is arranged on the second face 10-2 in such a posture that the circuit board 45 is upright from the second face 10-2 of the backplane 10.

As illustrated in FIGs. 3 and 9, each power source unit 40 includes a power source unit cover (second unit cover) 41 on which second intake openings 43 and second exhaust openings 44 are formed.
The power source unit cover 41 takes a form of a rectangular parallelepiped and defines the inner space that contains the circuit board 45 and the circuit elements 46.

The second intake openings 43 are formed on a face of the power source unit cover 41, the face opposing to the second face 10-2; and the second exhaust openings 44 are formed on the back face of the power source unit cover 41, that is the opposite face of the power source unit cover 41 to the face on which the second intake openings 43 are formed.
The second intake openings 43 are formed on position opposing to the backplane first openings 11 of the backplane 10.

In the first embodiment, as depicted in FIGs. 2 and 8, the two fans 42 are provided to each power source unit 40 adjacently to the second exhaust openings 44.
The first air flow generated by the first fans 42 is originated from air taken from the front end of the drive enclosure 3 and passes through the first storage units 20-1. After passing through the first storage units 20-1, the first air flow passes through the first partition-board opening 51 and the backplane first openings 11, and then introduced into the power source units 40. The first air flow taken into each power source unit 40 through the second intake openings 43, cools the circuit board 45 and the circuit elements 46 on the circuit board 45 while passing through the device and elements, and is finally exhausted through the second exhaust openings 44 from the drive enclosure 3.

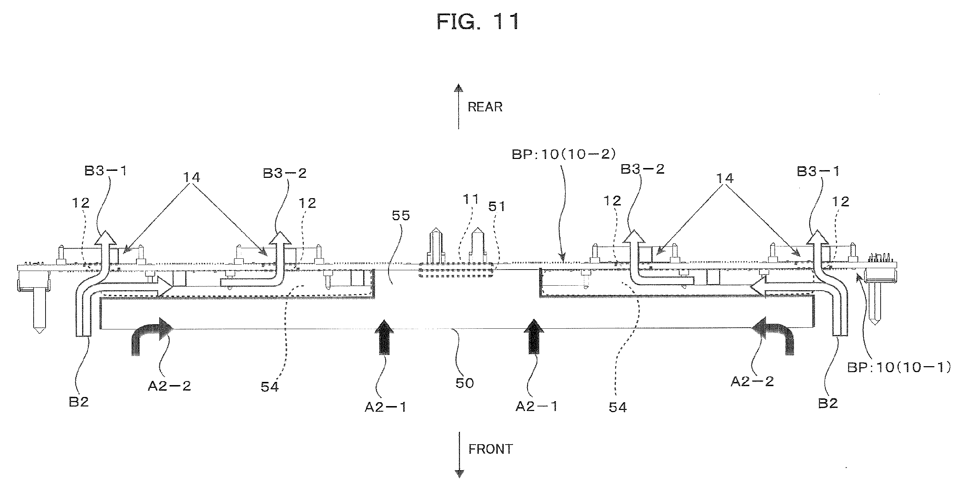

(2) cooling operation in drive enclosure of the first embodiment:
Next, description will now be made in relation to cooling the inside of each drive enclosure 3 of the first embodiment by the first fans 42 and the second fans 32 when the drive enclosure 3 is operating with reference to FIGs. 10 and 11.
FIG. 10 is a top view depicting airflow when the drive enclosure 3 of the first embodiment is operating; and FIG. 11 is a top view depicting air-flow near to the backplane 10 and the partition board 50 when a drive enclosure 3 of FIG. 10 is operating;

To simplify the drawings, part of reference numbers detailed above are omitted in FIGs. 10 and 11.
In FIGs. 10 and 11, the black arrows represent the traveling directions of the first air flow generated by the first fans 42 and the white arrows represent the traveling direction of the second air flow generated by the second fans 32.

First of all, description will now be made in relation to cooling the inside of the drive enclosure 3 with the first air flow generated by the first fans 42.
Following operation of the drive enclosure 3, the first fans 42 included in the power source units 40 start their operation of generating the first air flow from the front end to the rear end of the drive enclosure 3.

The first air flow generated by the first fans 42 travels from the front end of the drive enclosure 3 to the first storage units 20-1 along the A1 direction.
The first air flow traveling along the A1 direction flows into the respective first storage units 20-1 from the front end of the drive enclosure 3, travels the spaces in the respective first storage units 20-1 toward the backplane 10.

The first air flow passing though the first storage unit 20-1 disposed closer to the first partition-board opening 51 travels in the direction A2-1 from the front end to the rear end of the drive enclosure 3.
The first air flow is prevented from flowing into the second storage units 20-2 by the inhibitor 52.

The first air flow passing though the first storage unit 20-1 disposed farther from the first partition-board opening 51 travels the cross direction of the first partition-board opening 51, that is, travels spaces in the first storage units 20-1 (first HDDs 21-1) along the A2-2 direction.
In the first embodiment, the first air flow traveling along the A2-2 direction passes through the vent holes 25-1 and then reaches the first partition-board opening 51.

In each first storage unit 20-1, heat emitted from the first HDD 21-1 therein is removed by the first air flow traveling along the A2-1 or A2-2 direction and the storage unit 20-1 is thereby cooled.
Next, the first air flow passes through the first partition-board opening 51 and the backplane first opening 11, flows into the power source units 40 from the second intake openings 43 thereon, and travels inside the power source unit covers 41 along the A3 direction.

The first air flow traveling the A3 direction removes heat emitted from the circuit board 45 and the circuit elements 46 on the circuit board 45 in each power source unit 40, passes through the second exhaust opening 44, and is finally exhausted in the A4 direction, i.e., rearward the drive enclosure 3 (the power source unit 40).
Next, description will now be made in relation to cooling the inside of the drive enclosure 3 with the second air flow generated by the second fans 32.

Following operation of the drive enclosure 3, the second fans 32 included in the control units 30 start their operation of generating the second air flow from the front end to the rear end of the drive enclosure 3.
The second air flow generated by the second fans 32 travels from the front end of the drive enclosure 3 (control units 30) to the control units 30 along the B1 direction.

The second air flow traveling along the B1 direction flows through the first intake openings 33 into each controlling unit 30 and travels the inside of the control unit cover 31.
In each controlling unit 30, the second flow passing through the inside of the control unit cover 31 removes heat emitted from the circuit board 35 and the circuit elements 36 on the circuit board 35, and passes through the first exhaust openings 34, and flows along the B2 direction, that is, into the vent space 54.

The second air flow travelling inside each vent space 54 along the B2 direction passes through the backplane second opening 12 formed at a position facing the vent space 54.
The second air flow passing through the second backplane opening 12 closer to the position of the first face 10-1 at which position either controlling unit 30 is disposed travels in the B3-1 direction, that is, from the front end to the rear end of the drive enclosure 3.

In contrast, the second air flow passing through the second backplane opening 12 farther from the position of the first face 10-1 at which position either controlling unit 30 is disposed travels inside either vent space 54 and then flows in the B3-2 direction.
The second air flow traveling in the B3-1 direction and the B3-2 direction flows into the second storage units 20-2 from the front portion of the drive enclosure 3 and travels spaces in each second storage unit 20-2 toward the rear of the drive enclosure 3.

In each second storage unit 20-2, heat emitted from the second HDD 21-2 is removed by the second air flow traveling in the B3-1 direction and the B3-2 direction and the second storage unit 20-2 is thereby cooled.
The second air flow having passed through the second storage units 20-2 is finally exhausted in the B4 direction, i.e., rearward the drive enclosure 3 (second storage units 20-2).
As described above, the presence of the partition board 50 in the drive enclosure 3 of the first embodiment makes it possible to divide the air flow generated in the drive enclosure 3 into the first flow passing through the first HDDs 21-1 and then the power source units 40 and the second flow passing through the controlling units 30 and then the second HDDs 21-2.

As discussed above, HDDs endures heat temperature around 60 °C, and is a device that is the most susceptible to heat in the drive enclosure and that emits a large amount of heat.
Accordingly, the partition board 50 of the first embodiment cools the second HDDs 21-2 disposed on the rear portion with air having passed the unit (control units 30) on the front portion, not with air warmed by the first HDDs 21-1 on the front portion.

Thereby, the drive enclosure 3 improves the cooling capability of the second HDDs 21-2 of the second storage units 20-2, and consequently, the cooling efficiency of the entire drive enclosure 3 can be improved.
In addition, the first air flow having cooled the first HDDs on the front portion cools the power source units 40 on the rear portion while the second HDDs 21-2 on the rear portion is cooled with the second air flow having passed through the controlling units 30 on the front portion.

As the above, the drive enclosure 3 of the first embodiment uses air flow that is to pass through or that has passed through different kind of unit to be cooled to separately cool the first HDDs 21-1 disposed on the front portion from the second HDDs 21-2 on the rear portion.
This achieves more efficiently use of the inner space of the drive enclosure 3 as compared with a case where flow paths dedicated to cooling the respective HDDs 21 are formed, so that the efficiency in installing the HDDs in the drive enclosure 3 can be enhanced.

Furthermore, the enhanced efficiency to cool the second HDDs eliminates the condition for larger distance between contiguous second storage units 20-2 than that between contiguous first storage units 20-1.
This allows the second storage units 20-2 in the drive enclosure 3 to be installed at the same density as the first storage units 20-1, so that the efficiency in installing HDDs in the drive enclosure 3 can be improved as compared with the disk array unit 103 illustrated in FIG. 19.

The partition board 50 includes a protrusion 55, which sticks out toward the first face 10-1, at the outer circumference of the first partition-board opening 51.
The protrusion 55 of the partition board 50 prevents the second air flow, which has been generated by the second fans 32 and has passed through the control units 30, from flowing into the power source units 40.
Furthermore, the protrusion 55 of the partition board 50 causes the first partition-board opening 51 to communicate with the backplane first opening 11. With this configuration, the first air flow, which has been generated by the first fans 42 and has passed through the first storage units 20-1, is efficiently introduced to the power source units 40 to enhance the cooling capability of the drive enclosure 3.

The partition board 50 defines the vent spaces 54 between the inhibitor 52 and the backplane 10, and the second backplane openings 12 are formed at the positions facing the respective vent spaces 54. Such a combination of the backplane 10 and the partition board 50 allows the controlling units 30 and the second storage units 20-2 to communicate with each other, so that the inner space of the drive enclosure 3 can be efficiently used. Consequently, the efficiency in installing HDDs in the drive enclosure 3 can be enhanced.

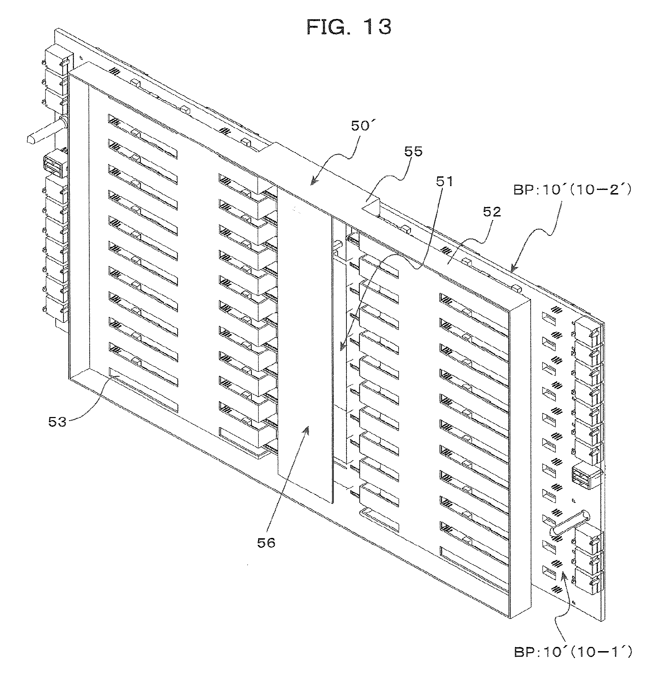

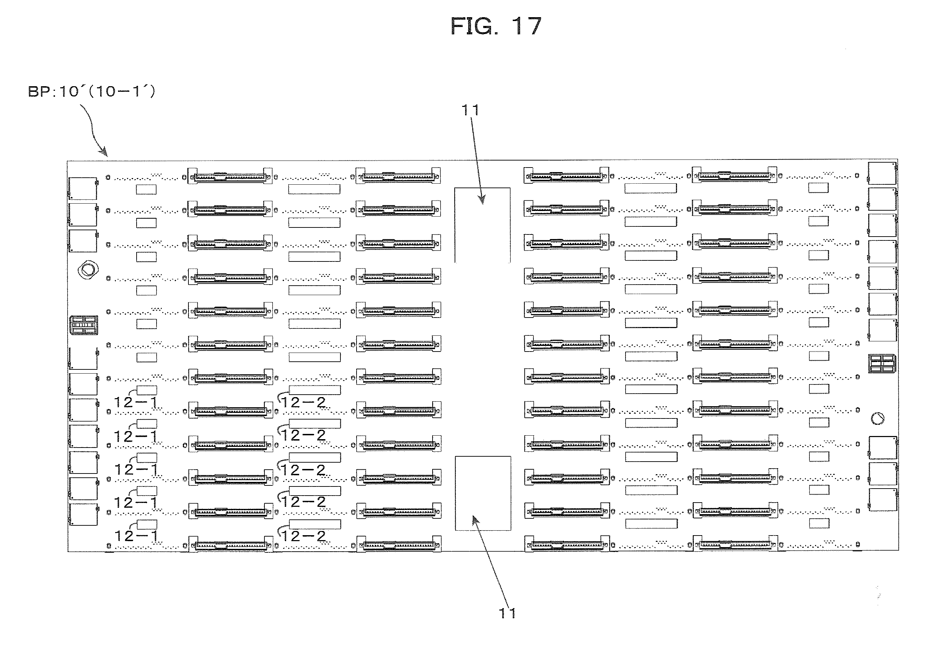

(3) modification to first embodiment:
The structure of the partition board 50 of the drive enclosure 3 of the first embodiment is not limited to the above and alternatively, may include a partition 56 as a partition board 50' of the drive enclosure 3 according to a modification to the first embodiment depicted in FIGs. 13-16.
The structure of the backplane 10 of the drive enclosure 3 of the present invention is not limited to the above. Alternatively, likewise the backplane 10' of the modification illustrated in FIG. 17, the opening areas of the respective second backplane opening 12 may be different with the position of each second backplane opening 12, such as the second backplane openings 12-1 and 12-2.

Like reference numbers designate similar parts and elements between the drive enclosure 3 of FIGs. 13-17 and that of the first embodiments, so any repetitious description is omitted here.

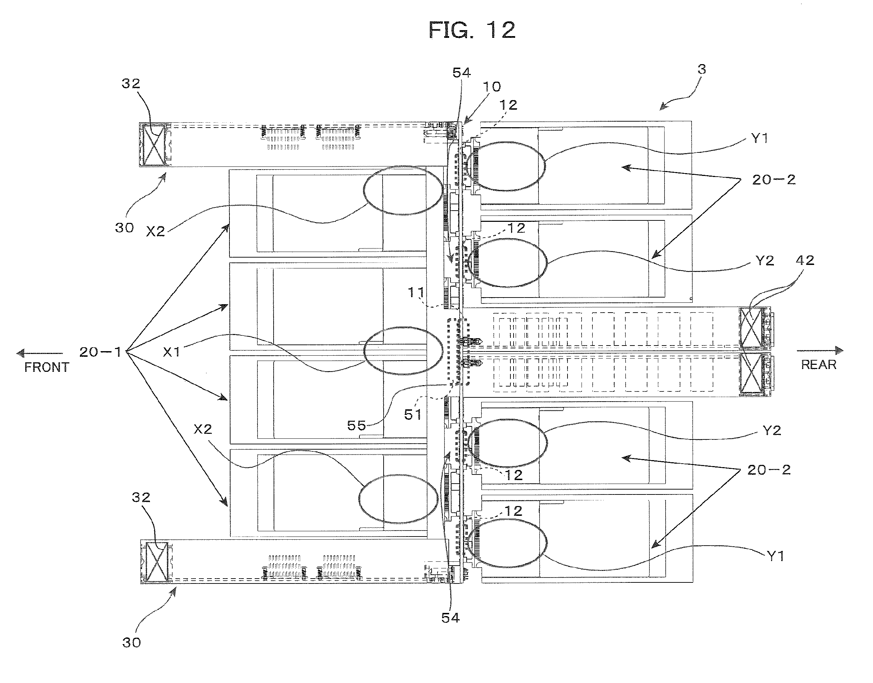

FIG. 12 is a top view of the drive enclosure 3 illustrated in FIG. 2.
As illustrated in FIG. 12, the first air flow which is generated by the first fans 42 and which is passing through corners X2 farther from the first partition-board opening 51 is less in amount than the first flow which is passing through the center portions X1 closer to the first partition-board opening 51 because fluids tend to flow through the shortest route. Here, each corner X2 is a position in the first storage unit 20-1, the position being closer to the backplane 10, and is more specifically a corner formed by the backplane 10 and either control unit 30.

Accordingly, the first air flow passing through the corners X2 has the capability of cooling the first storage units 20-1 at the corners X2 lower than the capability of cooling the first storage units 20-1 at the center portions X1 by the first air flow passing through the center portions X1.

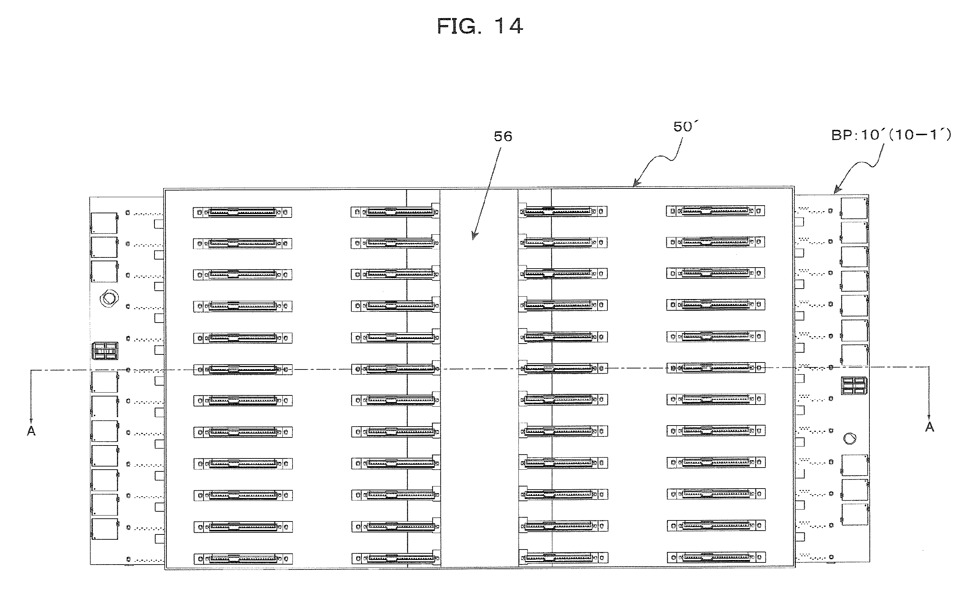

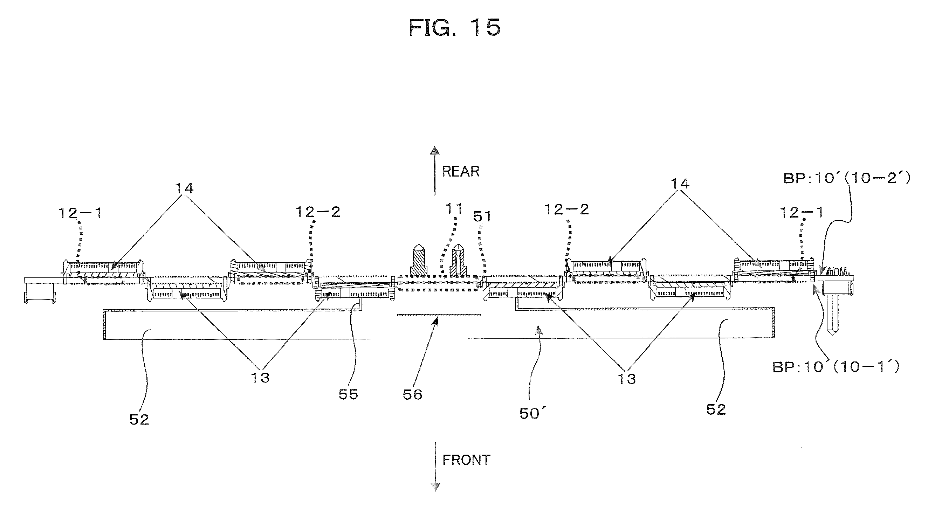

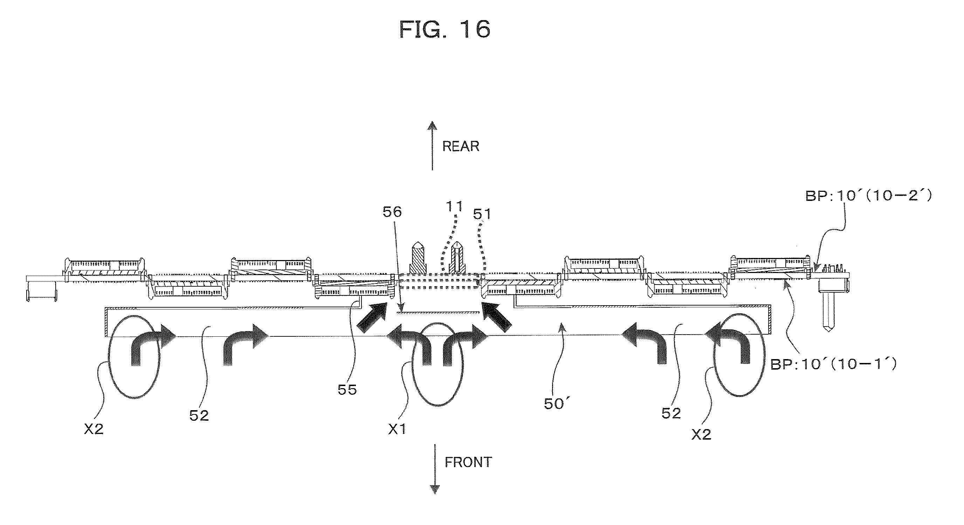

FIG. 13 is a perspective view illustrating the backplane 10' and the partition board 50' of the drive enclosure 3 according to a modification to the first embodiment; FIG. 14 is a front view illustrating the backplane 10' and the partition board 50' of FIG. 13; FIG. 15 is a sectional view of the backplane 10' and the partition board 50' of FIG. 14 being sectioned by arrow A-A; and FIG. 16 is a sectional view of the backplane 10' and the partition board 50' of FIG. 14 being sectioned by arrow A-A when a drive enclosure 3 of the modification is operating.

As illustrated in FIGs. 13-15, the partition board 50' of the modification includes, between the first partition-board opening 51 and the first storage units 20-1, a partition 56 that diffuses the first air flow from the first storage units 20-1.
As illustrated in FIG. 16, the partition 56 diffuses the first air flow passing through the center portions X1, which are closer to the first partition-board opening 51, to thereby generate resistance to the first air flow passing through the center portions X1 closer to the first partition-board opening 51 when flowing into the first partition-board opening 51.

The first air flow which is passing through the center portions X1 and which is diffused by the partition 56 generates a force to push the first air flow passing positions farther from the first partition-board opening 51 back to the corners X2. Thereby, it is possible to increase a flow amount of first air flow passing through the corners X2, which are farther from the first partition-board opening 51, as compared with a case where the partition 56 is not included in the partition board 50.

Accordingly, it is possible to enhance the capability of cooling the first storage units 20-1 at the corners X2 with the first air flow passing through the corners X2.
For example, the capability of cooling the first storage units 20-1 at the corners X2 by the first air flow passing through the corners X2 comes to be similar to the capability of cooling the first storage units 20-1 at the center portions X1 by the first air flow passing through the center portions X1. This means that cooling air can uniformly flow through all the first storage units 20-1.

In this modification, the partition 56 is included in the partition board 50 (sic, correctly 50'), but is not limited to this. Alternatively, the partition 56 may be formed on the casing of the drive enclosure 3.
As illustrated in FIG. 12, the second air flow which is generated by the second fans 32 and which passes through vicinities Y2 of opening exits farther from positions where the control units 30 are arranged on the first face 10-1' is less in flow amount than the second air flow passing through vicinities Y1 of opening exits closer to positions where the control units 30 are arranged on the first face 10-1'. This is because the second air flow passing through the vicinities Y2 of opening exits travels the vent space 54 having a large resistance longer than the second air flow passing through the vicinities Y1 of opening exits.

Accordingly, the second air flow passing through the vicinities Y2 of opening exits has a capability of cooling the second storage units 20-2 at the vicinities Y2 of opening exits is lower than the capability of cooling the second storage units 20-2 at the vicinities Y1 of opening exits by the second air flow passing through the vicinities Y1 of opening exits.
FIG. 17 is a front view of the backplane 10' of the drive enclosure 3 according to the modification to the first embodiment.

As illustrated in FIG. 17, the backplane 10' of this modification has second backplane openings 12 having different opening areas depending on the positions on the first face 10-1' at which position the control units 30 are arranged. Specifically, a second backplane opening 12-2 farther from a position where the control unit 30 is arranged on the first face 10-1' is configured to have a larger opening area than a second backplane opening 12-1 closer to a position where the control unit 30 is arranged on the first face 10-1'.

Considering that the second flow passing through the vicinities Y2 of opening exits travels through the vent space 54 having large resistance longer than the second air flow passing through the vicinities Y1 of the opening exits, the opening areas of the second backplane openings 12-2 are configured to be larger than the opening areas of the second backplane openings 12-1.
Forming the opening areas of the second backplane openings 12-2 wider than the opening areas of the second backplane openings 12-1 makes a circumstance where the second air flow easily flows through the second backplane openings 12-2.

This configuration increases the amount of the second air flow flowing into the second backplane openings 12-2 farther from the position where the control unit 30 is arranged on the first face 10-1' and passing through the vicinities Y2 of opening exits as compared with a case where the opening areas of the second backplane openings 12 are configured not to vary.
Accordingly, the capability of cooling the second storage units 20-2 at vicinities Y2 of opening exits by the second air flow passing through the vicinities Y2 of opening exits can be enhanced.

For example, the capability of cooling the second storage units 20-2 at vicinities Y2 of opening exits by the second air flow passing through the vicinities Y2 of opening exits comes to be similar to the capability of cooling the second storage units 20-2 at the vicinities Y1 of opening exits by the second air flow passing through the vicinities Y1 of opening exits. This means that cooling air can uniformly flow through all the second storage units 20-2.
The drive enclosure 3 of this modification to the first embodiment achieves the same effects at those of the drive enclosure 3 of the first embodiment.

In the drive enclosure 3 of this modification, the partition board 50' includes the partition 56, which makes it possible to enhance the capability of cooling the first storage units 20-1 at the corners X2 farther from the first partition-board opening 51 by the first air flow passing through the corners X2.
Furthermore, in the drive enclosure 3 of this modification, the second backplane openings 12-2 farther from a position where the controlling unit 30 is arranged on the first face 10-1' of the backplane 10' have larger opening areas than those of the second backplane opening 12-1 closer to the position where the controlling unit 30 is arranged on the first face 10-1' of the backplane 10'. This can enhance the capability of cooling the second storage units 20-2 at the vicinities Y2 of opening exits farther from a position where the controlling unit 30 is arranged on the first face 10-1' by the second air flow passing through the vicinities Y2 of opening exits.

(4) others:
An preferable embodiment is described as the above, but the present invention is by no means limited to the above embodiment. Various changes and modifications can be suggested without departing from the gist of the present invention.
For example, in the first embodiment and the illustrated modification, each controlling unit 30 includes two second fans 32 adjacently to the respective first intake openings 33, but the first embodiment and the modification are not limited to this. Alternatively, one or more second fans 32 may be disposed adjacently to the first exhaust openings 34 of each control unit 30 or rearward the second storage units 20-2. Any number of second fans 32 may be disposed at any positions only if the second fans 32 generate air flow that is to pass through the controlling units 30 and then the second storage units 20-2.

Similarly, in the first embodiment and the illustrated modification, each power source unit 40 includes two first fans 42 adjacently to the respective second exhaust openings 44 of the power source unit 40, but the first embodiment and the modification are not limited to this. Alternatively, one or more first fans 42 may be disposed adjacently to the second intake openings 43 of each power source unit 40 or frontward the first storage units 20-1. Any number of first fans 42 may be disposed at any positions only if the first fans 42 generate air flow that is to pass through the first storage units 20-1 and then the power source units 40.

In the first embodiment and the illustrated modification, two control units 30 are arranged on the right and left ends of the first face 10-1 or 10-1' and two power source units 40 are arranged at the middle across the right and left ends of the second face 10-2 and 10-2', but the arrangement of the controlling units 30 and the power source units 40 is not limited to this.
For example, any number of control units 30 and any number of power source units 40 may be arranged at any positions depending on the shapes of the backplane 10 or 10', the partition board 50 or 50', and arrangement of the first and the second storage units 20-1 and 20-2.

Still further, in the first embodiment and the illustrated modification, the control units 30 are arranged in the front portion of each drive enclosure 3 and the power source units 40 is arranged in the rear portion, but the arrangement of the controlling units 30 and the power source units 40 is not limited to this.
Alternatively, two controlling units 30 may be arranged in the rear portion of the drive enclosure 3 and two power source units 40 may be arranged in the front portion of the drive enclosure 3; and one controlling unit 30 and one power source unit 40 may be arranged each in the front and rear portions.

In the first embodiment and the illustrated modification, each HDD 21-1 is coupled to the corresponding first storage unit connector 13 via the relay connector 22-1 and through the connector opening 53 of the partition board 50 or 50', but the manner of coupling of the HDD 21-1 to the first storage unit connector 13 is not limited to this.
For example, the backplane 10 or 10' may include at least one HDD connection cable equipped with one or more connectors couplable to the backplane connectors 23-1 of the respective relay connector 22-1 (or the connectors of the HDDs 21-1), and the HDDs 21-1 may be coupled to the HDD connection cable.

This configuration eliminates the condition of the connector opening 53 for an opening area which the relay connector 22-1 (or HDD 21-1) penetrates, and the connector opening 53 sufficiently reserves an opening area to penetrate such an HDD connection cable penetrates. In addition, it is possible to omit preparing the first storage unit connectors 13 on the backplane 10 or 10', so that the production cost of the backplane 10 or 10' can be reduced. In cases where an HDD connection cable is directly coupled to the connector of the HDDs 21-1, each first storage unit 20-1 is allowed to omit the relay connector 22-1, and thereby production costs for the first storage unit 20-1 can be reduced.

In this case, the HDD connection cable is preferably coupled to the HDDs 21-1, detouring the partition board 50 or 50'. Alternatively, the partition board 50 or 50' preferably forms thereon a cable-passing opening which one or more HDD connection cables penetrate in a lump, and the HDDs cables passes through the cable-passing opening and then coupled to the respective HDDs 21-1.
This eliminates a condition of the connector opening 53 on the partition board 50 or 50' to reduce the production cost of the partition board 50 or 50', and prevents part of the first air flow having passed through the first storage units 20-1 from flowing into the vent spaces 54 through the connector openings 53.

Similarly, in the first embodiment and the illustrated modification, each HDD 21-2 is coupled to the second storage unit connector 14 via the relay connector 22-2, but the manner of coupling the HDD 21-2 to the second storage unit connector 14 is not limited to this.
For example, the backplane 10 or 10' may include at least one HDD connection cable equipped with one or more connectors couplable to the backplane connectors 23-2 of the respective relay connector 22-2 (or the connectors of the HDDs 21-2), and the HDDs 21-2 may be coupled to the HDD connection cable.

This configuration eliminates the condition of the backplane 10 or 10' for the second storage unit connectors 14, so that the production cost of the backplane 10 or 10' is reduced. In cases where an HDD connection cable is directly coupled to the connector of the HDD 21-2, each second storage unit 20-2 is allowed to omit the relay connector 22-2, and thereby production costs for the second storage unit 20-2 can be reduced.
In the first embodiment and the illustrated modification, each control unit 30 is arranged on the first face 10-1 or 10-1' in such a posture the circuit board 35 is upright from the first face 10-1 or 10-1', but the arrangement of the control units 30 is not limited to this. Namely, each control unit 30 is sufficiently arranged such that the air flow to be generated by the second fans 32 is taken into the first intake openings 33 on the control unit cover 31, cools the circuit board 35, particularly the circuit elements 36, and is then exhausted from the first exhaust openings 34.

For example, the circuit board 35 may be coupled to the first face 10-1 and 10-1' via a cable so as not to be upright from the first face 10-1 or 10-1'.
Similarly, in the first embodiment and the illustrated modification, each power source unit 40 is arranged in such a posture that the circuit board 45 is upright from the second face 10-2 or 10-2' of the backplane 10 or 10', but the arrangement of the power source unit 40 is not limited to this. Namely, each power source unit 40 is sufficiently arranged such that the air flow to be generated by the first fans 42 is taken from the second intake openings 43 on the power source unit cover 41, cools the circuit board 45, particularly the circuit elements 46, and is then exhausted from the second exhaust openings 44.

For example, the circuit board 45 may be coupled to the second face 10-2 and 10-2' via a cable so as not to be upright from the second face 10-2 or 10-2'.
As illustrated in FIGs. 4, 6, and 16, the shapes of backplane first openings 11, the second backplane openings 12, 12-1, and 12-2, and the first partition-board opening 51 are rectangle in the first embodiment and the illustrated modification. The shapes of these elements are not limited to rectangles, and may be other shapes such as ovals.

As illustrated in FIGs. 4 and 16, the second backplane openings 12, 12-1, and 12-2 in the first embodiment and the illustrated modification formed on one of the right and the left portions of the first storage unit connectors 13 and on one of the upper and the lower portions of the second storage unit connectors 14, but the manner of forming the second backplane openings 12, 12-1, and 12-2 is not limited to this.
For example, any number of second backplane openings 12, 12-1, and 12-2 may take any shapes, such as a collective large rectangle opening, formed at a position corresponding to the second storage units 10-2 (sic, correctly units 20-2) on the second face 10-2, according to a state of coupling the respective connectors 13 and 14 to the backplane 10 or 10'.

As described above, if the backplane 10 or 10' is equipped with one or more HDD connection cables that are coupled to the HDDs attached to the both faces thereof, the backplane 10 or 10' is allowed to omit the first storage unit connectors 13 and the second storage unit connectors 14.
Also in this case, the second backplane openings 12, 12-1, and 12-2 may take any shapes, such as a collective large rectangle opening, formed at a position corresponding to the second storage units 10-2 (sic, correctly 20-2) on the second face 10-2 of the backplane 10 or 10'.

In the first embodiment and the illustrated modification, although the vent holes 25 on the disk cover 24 are openings as illustrated in FIG. 7, the shapes of the vent holes 25 are not limited to this. Alternatively, a concave vent groove may be formed around each relay connector 22 that the disk cover 24 surrounds.
Further, the first embodiment and the illustrated modification assume each storage device 21 to be a HDD, which may be substituted for various recording medium usable as a storage device, such as a Solid State Drive (SSD).

## Claims

1. A storage apparatus comprising:
a backplane;
at least one first storage device attached to a first face of the backplane;
at least one second storage device attached to a second face of the backplane;
at least one first unit being attached to the first face and being adjacent to the first storage device;
at least one second unit being attached to the second face and being adjacent to the second storage device;
a first air-flow generator that generates air flow passing through, in sequence, the first storage device and the second unit;
a second air-flow generator that generates air flow passing through, in sequence, the first unit and the second storage device; and
a partition board that is interposed between the first storage device and the second storage device and that includes a first partition-board opening through which the first storage device communicates with the second unit and an inhibitor that prevents the air flow passing through the first storage device from flowing into the second storage device.

2. The storage apparatus according to claim 1, wherein the partition board is interposed between the backplane and the first storage device, and further includes a protrusion that sticks out from the outer circumference of the first partition-board opening toward the first face and that prevents the air flow passing through the first unit from flowing into the second unit.

3. The storage apparatus according to claims 1 or 2, wherein:
the partition board defines a vent space between the inhibitor and the backplane, the air flow generated by the second air-flow generator being introduced into the vent space; and
the backplane includes at least one first backplane opening through which the first storage device communicates with the second unit and at least one second backplane opening which is formed at a position facing the vent space and through which the first unit communicates with the second storage device.

4. The storage apparatus according to claim 3, wherein:
the first backplane opening is formed at a position on the second face, the position opposing to the second unit; and the second backplane opening is formed at a position on the second face, the position opposing to the second storage device.

5. The storage apparatus according to claim 3 or 4, wherein the first partition-board opening is formed on a position opposing to the first backplane opening.

6. The storage apparatus according to one of claims 3-5, wherein the second backplane opening disposed farther from the first unit on the first face has a larger opening area than the second backplane opening closer to the first unit on the first face.

7. The storage apparatus according to one of claims 1-6, further comprising a partition that is interposed between the first partition-board opening and the first storage device and that diffuses the air flow from the first storage device.

8. The storage apparatus according to one of claims 1-7, further comprising a relay connector that is smaller in size than at least one of the first storage device and the second storage device, wherein
at least one of the first storage device and the second storage device is coupled to the backplane via the relay connector.

9. The storage apparatus according to claim 8, further comprising a cover that surrounds the relay connector and at least one of the first storage device and the second storage device, wherein
the disk cover (sic, correctly, the cover) including a vent hole around the relay connector.

10. The storage apparatus according to one of claims 1-9, wherein:
the first unit includes a first circuit device and a first unit cover having a first intake opening and a first exhaust opening, the first exhaust opening being formed on a face of the first unit cover opposing to the first face, the air flow generated by the second air-flow generator being taken through the first intake opening into the first unit, cooling the first circuit device, being exhausted from the first exhaust opening, and passing through the second storage device; and
the second unit includes a second circuit device and a second unit cover having a second intake opening and a second exhaust opening, the second intake opening being formed on a face of the second unit cover opposing to the second face, the air flow generated by the first air-flow generator passing through the first storage device, being taken through the second intake opening into the second unit, cooling the second circuit device, and being exhausted from the second exhaust opening.

11. The storage apparatus according to one of claims 1-10, wherein:
the first unit is disposed on each of the both sides of the first face so as to horizontally sandwich the first storage device; and
the second unit is disposed between two groups of a plurality of the second storage devices, the two groups being horizontally disposed.

12. The storage apparatus according to one of claims 1-11, wherein the partitioning board includes a connector opening which a connector that connects the backplane to one of the first storage device and the second storage device penetrates.

13. The storage apparatus according to one of claims 1-12, wherein:
the second air-flow generator is included in the first unit; and
the first air-flow generator is included in the second unit.

14. The storage apparatus according to one of claims 1-13, wherein:
the at least one first unit is at least one control unit that controls the first storage device and the second storage device; and
the at least one second unit is at least one power source unit that supplies electric power to the first storage device, the second storage device, the control unit, and the backplane.

15. A partition board for a storage apparatus, the storage apparatus includes: a backplane; at least one first storage device attached to a first face of the backplane; at least one second storage device attached to a second face of the backplane; at least one first unit being attached to the first face and being adjacent to the first storage device; at least one second unit being attached to the second face and being adjacent to the second storage device; a first air-flow generator that generates air flow passing through, in sequence, the first storage device and the second unit; and a second air-flow generator that generates air flow passing through, in sequence, the first unit and the second storage device,
the partition board being interposed between the first storage device and the second storage device and comprising:
a first partition-board opening through which the first storage device communicates with the second unit; and
an inhibitor that prevents the air flow passing through the first storage device from flowing into the second storage device.

16. The partition board according to claim 15, being interposed between the backplane and the first storage device, and further comprising a protrusion that sticks out from the outer circumference of the first partition-board opening toward the first face and that prevents the air flow passing through the first unit from flowing into the second unit.

17. The partition board according to claim 15 or 16, wherein:
the backplane included in the storage device includes at least one first backplane opening through which the first storage device communicates with the second unit and at least one second backplane opening through which the first unit communicates with the second storage device; and
the partition board segments a vent space between the inhibitor and the backplane at a position opposing to the backplane second opening, the air flow generated by the second air-flow generator being introduced into the vent space.

18. The partition board according to claim 17, wherein the first partition-board opening is formed on a position opposing to the backplane first opening.

19. The partition board according to one of claims 15-18, further comprising a connector opening which a connector that connects the backplane to one of the first storage device and the second storage device penetrates.
